# EUROPEAN PATENT APPLICATION

(11) **EP 4 818 672 A1**
(43) Date of publication of application: **07.10.2026**
(21) Application number: 26168489.8
(22) Date of filing: 27.03.2026
(51) Int. Cl.: G01N 1/28, G01N 1/30, G01N 1/31, G01N 35/00

(54) **SMEARING APPARATUS, SPECIMEN ANALYSIS SYSTEM, AND SMEAR SPECIMEN PROCESSING METHOD**

(30) Priority: 31.03.2025 JP 2025057902
(71) Applicant: SYSMEX CORPORATION, Kobe-shi Hyogo 651-0073 (JP)
(72) Inventor: HATASE, Tetsunori, Kobe-shi, Hyogo, 651-0073 (JP); NAEMURA, Sakura, Kobe-shi, Hyogo, 651-0073 (JP); KANEKO, Tetsuya, Kobe-shi, Hyogo, 651-0073 (JP); SHINABE, Seiya, Kobe-shi, Hyogo, 651-0073 (JP)
(74) Representative: Becker, Eberhard

(57) **Abstract**

Disclosed is a smearing apparatus for use in an analysis system including an imaging apparatus configured to capture an image of a smear specimen, the smearing apparatus comprising: a supply unit configured to store a plurality of slide glasses, each assigned with slide identification information, and to supply the slide glasses one by one; an aspirator configured to aspirate a specimen contained in a specimen container; a smearer configured to smear the aspirated specimen onto the slide glass supplied from the supply unit; a stainer configured to stain the specimen smeared on the slide glass with a staining solution; a first reader configured to read specimen identification information assigned to the specimen container; a second reader configured to read the slide identification information; and a controller configured to digitally associate (A) the slide identification information of the slide glass on which the specimen is smeared and (B) the specimen identification information of the smeared specimen, thereby enabling the analysis system to identify the specimen based on the slide identification information.

## Description

### FIELD OF INVENTION

The present disclosure relates to a smearing apparatus, a specimen analysis system, and a smear specimen processing method.

### BACKGROUND

A smearing apparatus that prepares a smear specimen by smearing a specimen onto a slide glass is known. For example, Japanese Patent Application Publication No. 2017-198635 discloses a smearing apparatus that prints a specimen number, a date, a barcode, a two-dimensional code, or the like on a printing area of a slide glass using a printer.

### SUMMARY

A conventional smearing apparatus exemplified in Japanese Patent Application Publication No. 2017-198635 prints specimen identification information such as a specimen number and a patient name onto a slide glass by a thermal printer. The slide glass on which the specimen identification information is printed is supplied to an imaging apparatus, and a specimen is identified based on the specimen identification information. The imaging apparatus captures an image of the smeared specimen and analyzes the image to perform a morphological classification test of cells contained in the specimen. The thermal printer built in the smearing apparatus has a problem of being prone to failure because of the influence of powder of glass adhering to the surface of the slide glass or repeated contact with the slide glass. When the thermal printer fails, it becomes impossible to print the specimen identification information on the slide glass, resulting in that the imaging apparatus is unable to identify the specimen smeared on the slide glass. As such, the failure of the thermal printer has been a constraint on the automation of morphological examination using a smearing apparatus and an imaging apparatus. The present invention has been made based on such a technical background.

The present disclosure is directed to a smearing apparatus for use in an analysis system including an imaging apparatus configured to capture an image of a smear specimen, the smearing apparatus comprising: a supply unit configured to store a plurality of slide glasses, each assigned with slide identification information, and to supply the slide glasses one by one; an aspirator configured to aspirate a specimen contained in a specimen container; a smearer configured to smear the aspirated specimen onto the slide glass supplied from the supply unit; a stainer configured to stain the specimen smeared on the slide glass with a staining solution; a first reader configured to read specimen identification information assigned to the specimen container; a second reader configured to read the slide identification information; and a controller configured to digitally associate (A) the slide identification information of the slide glass on which the specimen is smeared and (B) the specimen identification information of the smeared specimen, thereby enabling the analysis system to identify the specimen based on the slide identification information.
A specimen analysis system comprising: a smearing apparatus configured to prepare a smear specimen; an imaging apparatus configured to capture an image of the smear specimen; and a controller, wherein the smearing apparatus includes: a supply unit configured to store and supply a slide glass assigned with slide identification information; an aspirator configured to aspirate a specimen contained in a specimen container; a smearer configured to smear the specimen aspirated onto the slide glass supplied from the supply unit; a stainer configured to stain the specimen smeared on the slide glass; and a first reader configured to read specimen identification information assigned to the specimen container; the imaging apparatus includes: a second reader configured to read the slide identification information of the slide glass; and an imager configured to capture an image of the specimen smeared on the slide glass; and the controller is configured to associate the specimen identification information read by the first reader with the slide identification information read by the second reader.

According to the present invention, the imaging apparatus is enabled to identify the specimen smeared on the slide glass without using a thermal printer, and it is possible to avoid a situation where the examination is stopped because of a failure of the thermal printer.

### BRIEF DESCRIPTION OF THE DRAWINGS

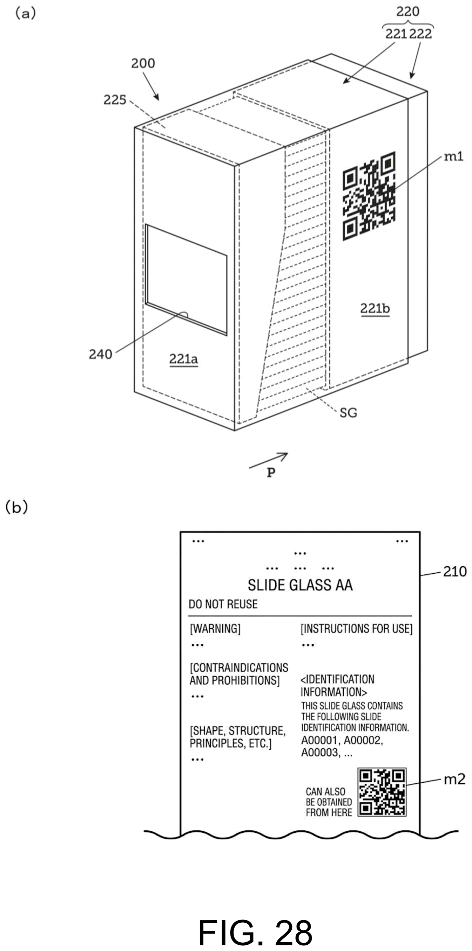

FIG. 1 is a diagram schematically showing a configuration of a specimen analysis system.
FIG. 2 is a diagram showing a configuration example of a smearing apparatus and an imaging apparatus in a plan view.
FIG. 3 is a diagram showing a configuration example of a slide glass.
FIG. 4 is a perspective view showing a configuration of a rack and a specimen container.
FIG. 5 is an explanatory diagram of reading of slide identification information assigned to a slide glass.
FIG. 6 is an explanatory diagram of smearing a specimen onto a slide glass.
FIG. 7 is an explanatory diagram of a slide magazine and a storage.
FIG. 8 is a block diagram showing an example of a functional configuration of the smearing apparatus in the first embodiment.
FIG. 9 is a block diagram showing an example of a functional configuration of the imaging apparatus in the first embodiment.
FIG. 10 is a block diagram showing an example of a functional configuration of a blood cell counter in the first embodiment.
FIG. 11 is a block diagram showing an example of a functional configuration of a host computer in the first embodiment.
FIG. 12 is a diagram showing an example of order information in the first embodiment.
FIG. 13 is a diagram showing an example of a structure of result data in the first embodiment.
FIG. 14 is a diagram showing an example of a data configuration of identification information association data in the first embodiment.
FIG. 15 is a schematic diagram showing a flow of associating a specimen number and a slide number in the first embodiment.
FIG. 16 is a diagram showing an example of a timing chart of processing performed by each apparatus in the first embodiment.
FIG. 17 is a diagram showing an example of a GUI displaying a blood cell image acquired by the imaging apparatus, a blood cell classification result obtained by analyzing the blood cell image, and a hematology test result.
FIG. 18 is a diagram showing an example of a GUI displaying a blood cell image acquired by the imaging apparatus, a blood cell classification result obtained by analyzing the blood cell image, and a hematology test result.
FIG. 19 is a flowchart showing an example of a flow of a smear specimen preparation process in the first embodiment.
FIG. 20 is a flowchart showing a modification of the flow of the smear specimen preparation process in the first embodiment.
(a) and (b) of FIG. 21 are diagrams showing an example of a screen displayed on a display of the smearing apparatus in the first embodiment.
(a) and (b) of FIG. 22 are diagrams showing an example of a screen displayed on a display of the smearing apparatus in the first embodiment.
(a) and (b) of FIG. 23 are diagrams showing an example of a screen displayed on a display of the smearing apparatus in the first embodiment.
(a) and (b) of FIG. 24 are diagrams showing an example of a screen displayed on a display of the smearing apparatus in the first embodiment.

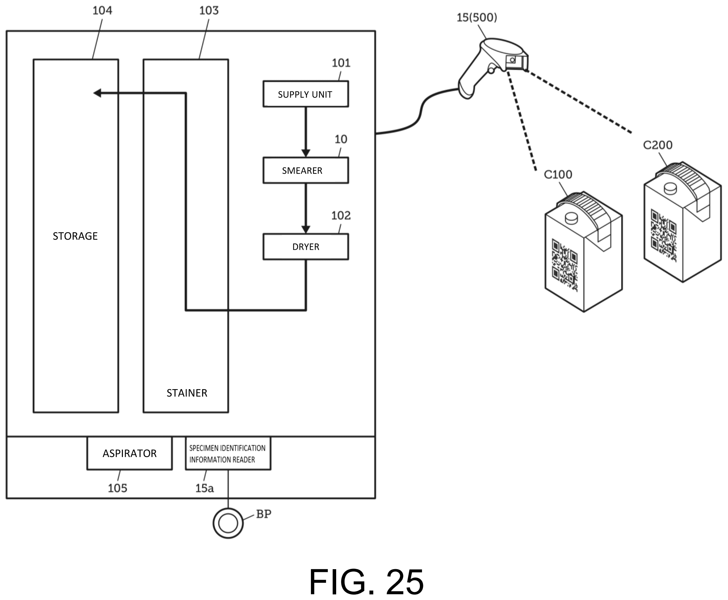

FIG. 25 is a diagram showing an example of a functional configuration of the smearing apparatus in the second embodiment.

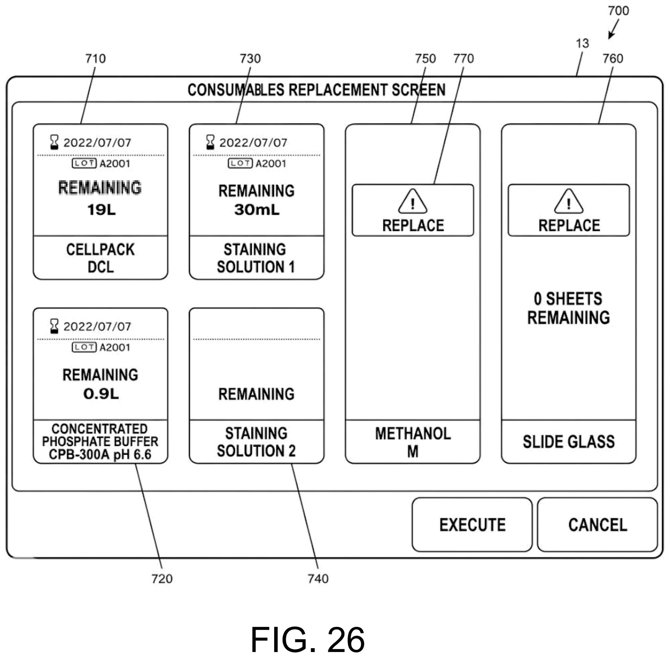

FIG. 26 is a diagram showing an example of a consumable replacement screen displayed on a display of the smearing apparatus in the second embodiment.

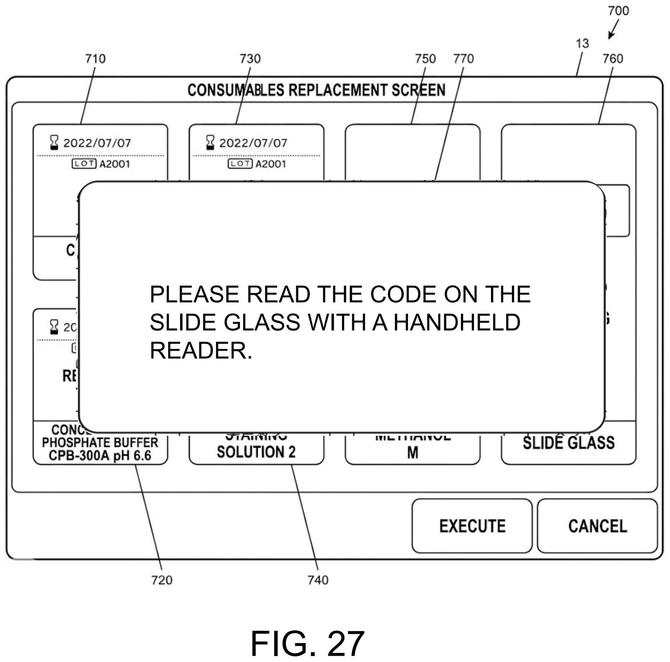

FIG. 27 is a diagram showing an example of a pop-up screen displayed on a display of the smearing apparatus in the second embodiment.
(a) of FIG. 28 is a diagram showing a configuration example of a slide glass set. (b) of FIG. 28 is a diagram showing a configuration example of an attached document.

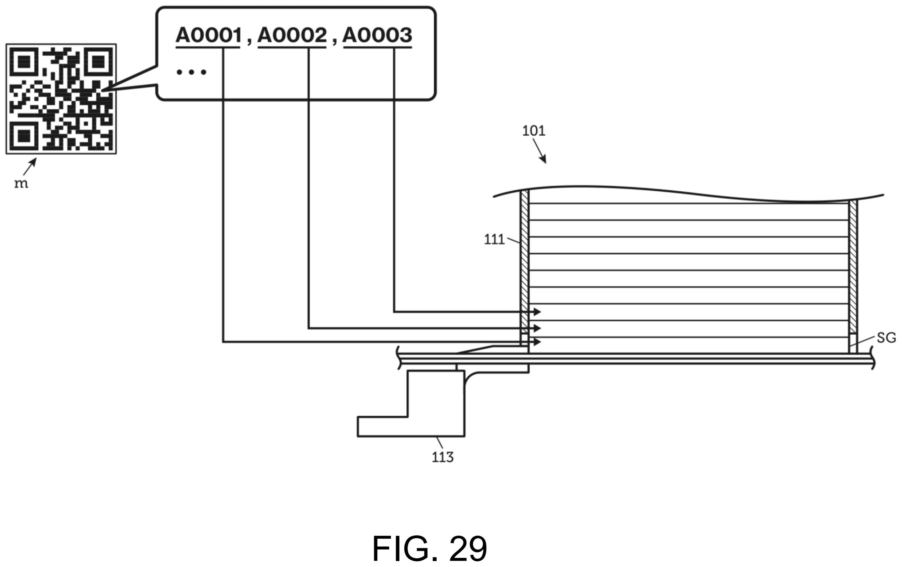

FIG. 29 is a diagram showing an example of a stacking order of slide glasses in a slide storage.

### DESCRIPTION OF THE EMBODIMENTS

An example of a smearing apparatus according to the present invention will be described with reference to the drawings.

### <First Embodiment>

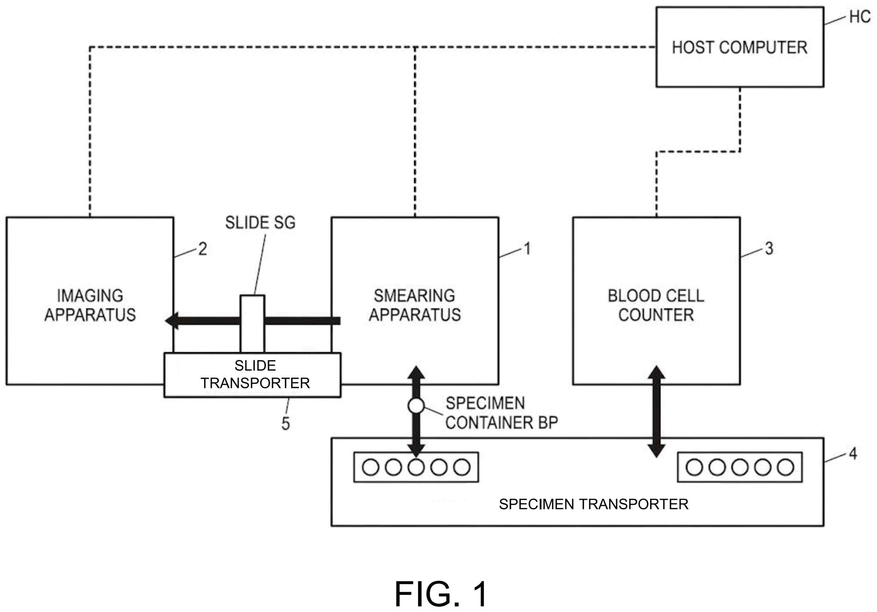

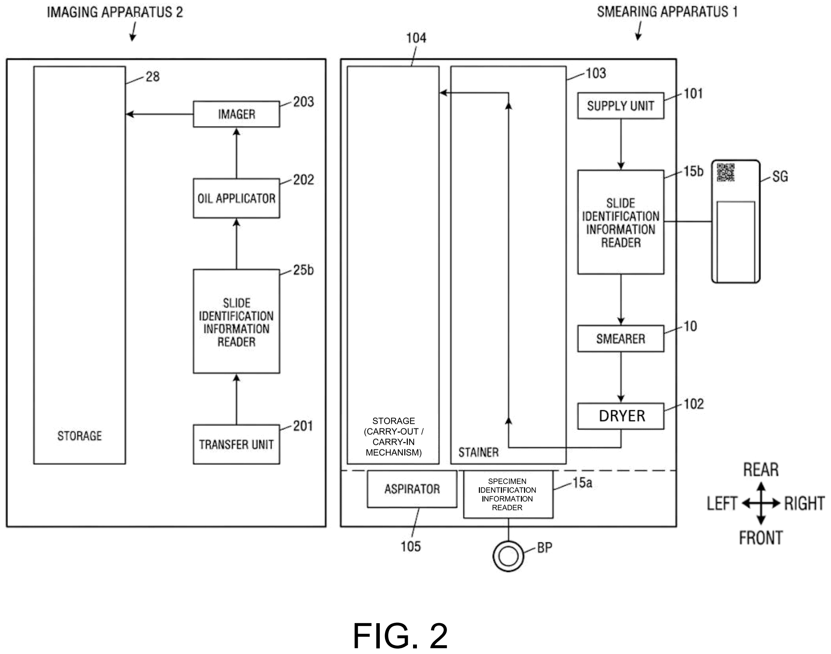

A smearing apparatus 1 according to the first embodiment will be described with reference to FIG. 1. The smearing apparatus 1 of the first embodiment comprises a slide identification information reader 15b (see FIG. 2) for reading slide identification information pre-printed on a slide glass SG (slide).

### 1. Configuration of specimen analysis system S

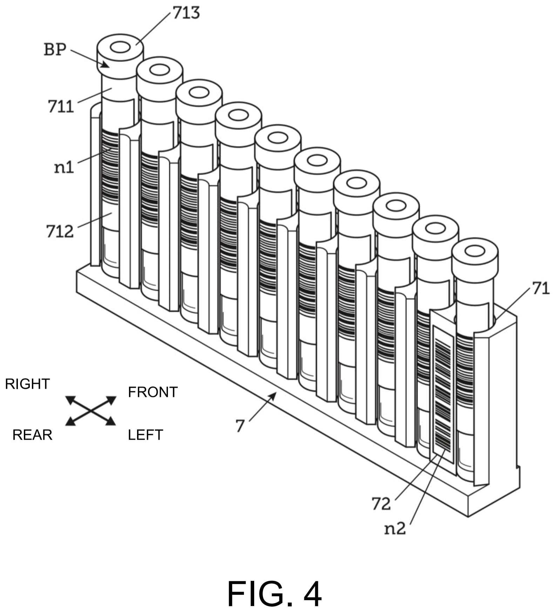

FIG. 1 is a diagram schematically showing an example of a specimen analysis system S including a smearing apparatus 1 according to the first embodiment. Arrows indicate a transport flow of a rack 7 that holds specimen containers BP (see FIG. 4) containing specimens.

FIG. 1 shows a configuration of the specimen analysis system S in a plan view. Directions of front, back, left, and right in the plan view are indicated by arrows. An operator accesses the specimen analysis system S from the front of the specimen analysis system S.

The specimen analysis system S exemplified in FIG. 1 includes a smearing apparatus 1, an imaging apparatus 2, a blood cell counter 3, a specimen transporter 4, and a slide transporter 5.

The blood cell counter 3 aspirates a specimen transported by the specimen transporter 4 and counts blood cells contained in the specimen. The smearing apparatus 1 aspirates the specimen transported by the specimen transporter 4 and smears the specimen onto a slide glass SG. The specimen transporter 4 supplies specimens to the blood cell counter 3 and the smearing apparatus 1 by transporting a rack containing specimen containers BP.

The slide transporter 5 transports the slide glass SG on which the specimen has been smeared by the smearing apparatus 1 to the imaging apparatus 2. The imaging apparatus 2 captures an image of the transported slide glass SG.

### 2. Description of apparatuses related to slide processing

FIG. 2 is a diagram showing a configuration example of the smearing apparatus 1 and the imaging apparatus 2 in a plan view. In FIG. 2, arrows indicate movements of the slide glass SG.

The smearing apparatus 1 is an apparatus that prepares a smear specimen by smearing blood or the like, which is a specimen of a subject, onto a slide glass SG and performing processes such as drying and staining. The smearing apparatus 1 includes a supply unit 101, a slide identification information reader 15b, a specimen identification information reader 15a, a smearer 10, a dryer 102, a stainer 103, a storage 104, and an aspirator 105. The configuration of each unit will be described later. As shown in FIG. 2, the smearing apparatus 1 does not include an internal printer for printing identification information on the slide glass SG. By including the slide identification information reader 15b instead of the internal printer, the smearing apparatus 1 enables identification of the specimen smeared on the slide glass SG. This function will also be described later.

The imaging apparatus 2 is an apparatus that captures an image of a smear specimen prepared by the smearing apparatus 1.

The imaging apparatus 2 includes a transfer unit 201, a slide identification information reader 25b, an oil applicator 202, an imager 203, and a storage 28. The transfer unit 201 receives a smear specimen from the smearing apparatus 1 via the slide transporter 5 (see FIG. 1). The slide identification information reader 25b reads a machine-readable code printed on the slide glass SG of the received smear specimen. The oil applicator 202 applies immersion oil to a smeared surface of the smear specimen. The smear specimen to which the immersion oil has been applied is transported to the imager 203. The imager 203 includes an objective lens and captures an image of the smear specimen. The imager 203, for example, captures an enlarged image of each of a plurality of cells contained in the smear specimen. The storage 28 stores the smear specimen imaged by the imager 203. Imaged image data is transmitted to the controller 21. The controller 21 is programmed to perform predetermined processes such as cell feature extraction, cell identification / classification, extraction of blood cell images, automatic classification of blood cells, and counting for each blood cell type. The captured image data and analysis results may be displayed on a display (not shown) provided in the imaging apparatus 2 or on a display of another apparatus communicable via the communication part 23 of the imaging apparatus 2, together with information decoded from the read machine-readable code.

### 3. Description of slide glass SG

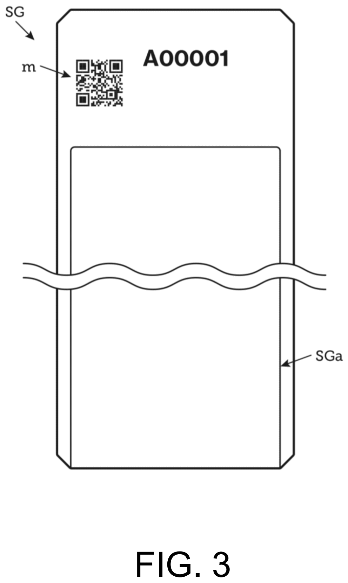

FIG. 3 shows an example of a slide glass SG. The slide glass SG is formed of a rectangular glass plate material, and a specimen is smeared on a smear area SGa at the center thereof. Slide identification information is printed on one longitudinal end of the slide glass SG.

### 3-1. Definition of slide identification information

The slide identification information is unique identification information individually assigned to each slide glass SG. The slide identification information may be, for example, a slide number unique to the slide glass SG.

A slide number is, for example, a number, a character, or a combination thereof unique to each slide. For example, the slide number is represented by numbers, characters, or a combination thereof, such as "000001", "AAAAAA", or "A00001". The slide numbers may be consecutive numbers or randomly assigned numbers. Preferably, the slide number is a combination of numerals and characters of five or more digits.

### 3-2. Method of displaying slide identification information

The slide identification information may be assigned to the slide glass SG during a manufacturing process of the slide glass SG. Alternatively, the slide identification information may be assigned to the slide glass SG by an operator in a laboratory. In this case, the operator may assign the slide identification information using an automation apparatus separate from the smearing apparatus 1. The assignment of the slide identification information to the slide glass SG may be performed by any method of, for example, (1) printing, (2) engraving, or (3) labeling.

In an example of printing, the slide identification information may be printed by applying ink to a surface of the slide glass SG. As a printer that prints the slide identification information by applying ink, for example, a thermal printer, an inkjet printer, or a UV printer can be used.

In an example of engraving, the slide identification information may be engraved by processing the surface of the slide glass SG. As a processing method, for example, laser processing or processing using powder may be used. Examples thereof include laser printing, a laser marker, and sandblasting.

In an example of labeling, a label on which the slide identification information is printed may be stuck to an upper part of the slide glass SG.

### 3-3. Method of assigning slide identification information

The slide identification information may be assigned to the slide glass SG, for example, in the form of a machine-readable code generated based on the slide number. That is, the slide identification information may be represented by a machine-readable code encoding the slide number. The example of FIG. 3 shows an example in which a machine-readable code generated based on a slide number is printed on a slide glass. The machine-readable code may be, for example, a one-dimensional code or a two-dimensional code. As the machine-readable code, a two-dimensional code is more preferable from the viewpoint of enhancing readability. The two-dimensional code may be, for example, a matrix type in which information is displayed in a vertical and horizontal mosaic pattern with white and black cells. Examples of the matrix type include a QR Code (registered trademark), Data Matrix, and VeriCode. In the example of FIG. 3, a QR code m is displayed as the machine-readable code. The slide number is obtained by reading and decoding the machine-readable code by the slide identification information reader 15b of the smearing apparatus 1.

The slide identification information may be assigned to the slide glass SG in both the form of a machine-readable code and the form of characters or numbers. In the example of FIG. 3, a slide number "A00001" and a QR code m generated based on this slide number are printed.

A plurality of machine-readable codes may be assigned to the slide glass SG. For example, a one-dimensional code and a two-dimensional code may be assigned to one slide glass SG. In this case, it is possible to support reading by both a code reader for a one-dimensional code and a code reader for a two-dimensional code. In addition, a plurality of two-dimensional codes may be assigned to the slide glass SG. In this case, even if one of the two-dimensional codes is missing and cannot be read, readability is enhanced by reading the other two-dimensional code.

### 4. Description of specimen container BP

FIG. 4 is a perspective view showing configurations of a rack 7 and a specimen container BP.

The rack 7 includes ten holes 71 configured to hold the specimen containers BP in an upright position, and a barcode label 72. The barcode label 72 is attached to a rear surface of the rack 7. On the barcode label 72, a barcode n2 indicating a rack ID is printed as identification information capable of individually identifying the rack 7.

The specimen container BP includes a body 711, a barcode label 712, and a cap 713. The body 711 is a tubular container with an open upper end and contains a specimen therein. The barcode label 712 is attached to a surface of the body 711. On the barcode label 712, a barcode n1 indicating a specimen number is printed as identification information capable of individually identifying the specimen therein. The specimen number is a combination of numbers and characters unique to each specimen. For example, the specimen number is represented by numbers, characters, or a combination thereof, such as "000001", "BBBBBB", or "B00001". The cap 713 is installed at the upper end of the body 711 so as to seal the inside of the body 711. The cap 713 is configured to be penetrable vertically by a piercer provided in the smearing apparatus 1.

### 5. Detailed description of each part of smearing apparatus 1

Referring again to FIG. 2, the configuration of each part of the smearing apparatus 1 will be described in order.

### <Supply unit 101>

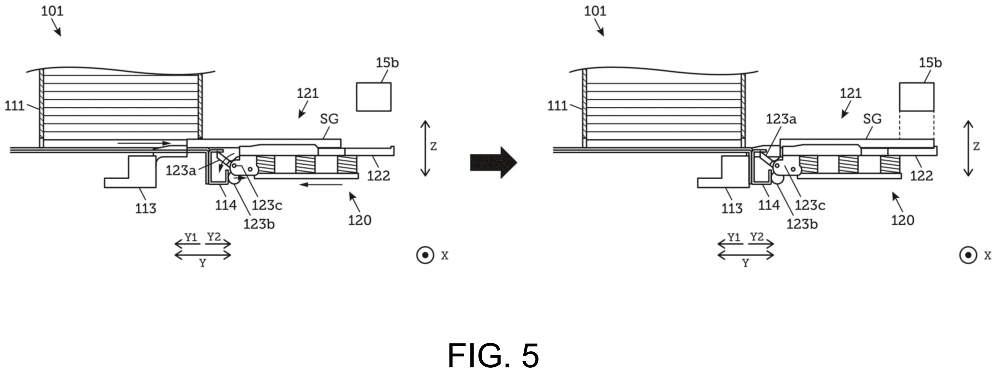

The supply unit 101 stores slide glasses SG before processing and supplies the stored slide glasses SG one by one to the slide identification information reader 15b. FIG. 5 is a diagram schematically showing the configuration of the supply unit 101. The X direction in the figure corresponds to the left-right direction of FIG. 2, and the Y direction corresponds to the front-rear direction. The Z direction in the figure corresponds to the vertical direction.

In the configuration example shown in FIG. 5, the supply unit 101 includes a case 111 for holding a plurality of slide glasses SG before processing in a stacked state, and a discharge part 113 for pushing out the slide glasses SG stacked in the case 111 one by one from the case 111 to supply them to a transport part 120. The case 111 has a hollow cylindrical shape extending in the vertical direction (Z direction). The case 111 holds a plurality of slide glasses SG therein in a state of being stacked vertically and parallel to the horizontal direction. The case 111 has a rectangular parallelepiped outer shape so as to surround the slide glasses SG in a state where a predetermined number of slide glasses SG are stacked in the vertical direction.

The discharge part 113 is provided below the case 111. An abutting member 114 is provided at a transfer position of the slide glass SG. The transport part 120 moves in the Y1 direction so as to bring an opening/closing part 123b of a holding member 121 into contact with the abutting member 114 arranged at the transfer position of the slide glass SG. Accordingly, a pressing part 123a of the holding member 121 is rotated about a rotation shaft 123c, and the pressing part 123a moves to an open position.

The discharge part 113 is provided so as to protrude upward from an installation surface of the slide glass SG. The protrusion amount of the discharge part 113 is smaller than the thickness of the slide glass SG. The discharge part 113 is movable in the Y direction by a drive source (not shown) such as a motor. In the supply unit 101, with the pressing part 123a located at the open position, the slide glass SG is pushed out in the Y2 direction by the discharge part 113 and supplied to the transport part 120 while being maintained parallel to the horizontal direction. The discharge part 113 discharges the bottommost slide glass SG of the stack to the transport part 120. Thus, the slide glasses SG are supplied one by one from the supply unit 101 to the transport part 120.

The slide glass SG supplied to the transport part 120 is placed on the upper surface of a placement part 122 in the holding member 121 placed flat (parallel to the horizontal direction) such that a smearing surface faces upward. With the slide glass SG placed on the upper surface of the placement part 122, the slide glass SG is sent to the slide identification information reader 15b.

### <Slide identification information reader 15b>

Referring again to FIG. 2, the slide identification information reader (second reader) 15b will be described. The slide identification information reader 15b reads the slide identification information of the slide glass SG transferred from the supply unit 101. The slide identification information reader 15b may be provided between the supply unit 101 and the smearer 10. In other words, the slide identification information reader 15b may be provided at a position where the slide identification information is readable before the slide glass SG is transferred to the smearer 10. In this case, the slide identification information reader 15b reads the slide identification information of the slide glass SG being transported in a transport path from the supply unit 101 to the smearer 10. With such an arrangement, the smearing apparatus 1 smears the specimen onto the slide glass SG for which the reading of the slide identification information is successful, and skip smearing of the specimen onto the slide glass SG for which the reading fails. By avoiding smearing on a slide glass SG for which reading has failed, waste of the specimen is reduced. Note that the arrangement of the slide identification information reader 15b is not limited to this, and it may be provided after the smearer 10, for example.

As shown in FIG. 5, the slide identification information reader 15b may be provided above the transport part 120 at a position where the slide glass SG is supplied from the supply unit 101 to the transport part 120.

The slide identification information reader 15b may include, as main components, a camera unit that captures an image of a code assigned to the slide glass SG and an image processing unit that decodes the captured image. The slide identification information reader 15b may be arranged to read the slide identification information of the slide glass SG placed horizontally, for example, as shown in FIG. 5. Upon smearing a specimen onto the slide glass SG, as described later, the slide glass SG is placed horizontally, and the specimen is dropped and smeared. Therefore, by configuring the reader to read the slide identification information from the slide glass SG placed horizontally, it is not necessary to change the posture of the slide glass SG between the reading of the slide identification information and the smearing. This allows for smooth supply of the slide glass SG, reading of the slide identification information, and smearing of the specimen, contributing to an improvement in processing capacity.

As described with reference to FIG. 3, a machine-readable code encoding slide identification information is assigned to the slide glass SG. The slide identification information reader 15b captures an image of and decodes the machine-readable code assigned to the slide glass SG, thereby obtaining the slide identification information. The slide identification information reader 15b transmits the obtained slide identification information to the controller 11 described later.

Note that the slide identification information reader 15b may not include an image processor that performs decoding. The controller 11 may be configured to decode the image acquired by the slide identification information reader 15b.

### <Specimen Identification Information Reader 15a>

The specimen identification information reader 15a (first reader) includes, for example, a camera unit that performs image acquisition and an image processor as main components. The specimen identification information reader 15a may be, for example, a reading device capable of reading a specimen number assigned to the specimen container BP. The specimen number is encoded in a machine-readable code such as a one-dimensional code or a two-dimensional code. The specimen identification information reader 15a captures an image of the machine-readable code assigned to the specimen container BP, obtains the specimen number by decoding the machine-readable code, and transmits the obtained specimen number to the controller 11 described later.

The specimen identification information reader 15a may read, for example, the specimen number on a side surface of the specimen container BP held in an upright position in the rack 7. The specimen identification information reader 15a may, for example, take out the specimen container BP from the rack 7 while keeping it in the upright position using an arm device (not shown), and read the specimen number on the side surface of the specimen container BP taken out.

### <Aspirator 105>

The aspirator 105 includes, for example, an aspiration pipette that aspirates a specimen from the specimen container BP, a drive mechanism that drives the aspiration pipette, and a pump that generates pressure for aspirating the specimen into the aspiration pipette as main components. The tip of the aspiration pipette is configured to puncture the cap 713 of the specimen container BP. After the specimen identification information reader 15a reads the specimen number, the aspirator 105 drives the aspiration pipette by the drive mechanism, punctures and inserts the aspiration pipette into the cap 713 of the specimen container BP, and aspirates the specimen by the pressure of the pump. The aspirator 105 supplies the aspirated specimen to the smearer 10.

### <Smearer 10>

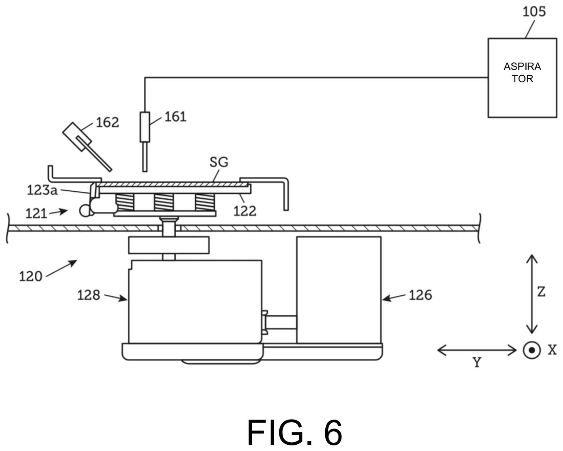

The smearer 10 includes, for example, a nozzle 161 and a smearing member 162 as main components. FIG. 6 is a diagram showing a configuration example of the smearer 10. The aspirator 105 is also shown. The nozzle 161 dispenses the specimen aspirated by the aspirator 105 onto the slide glass SG. The smearing member 162 is, for example, a spreader glass. The smearing member 162 smears the specimen onto the slide glass SG by moving while contacting the dispensed specimen at a predetermined angle.

### <Dryer 102>

The dryer 102 includes, for example, a fan that blows air toward the slide glass SG, and has a function of drying the specimen smeared on the slide glass SG by blowing air toward a smear area SGa of the slide glass SG on which the specimen is smeared. The dryer 102 may be incorporated into the smearer 10.

### <Stainer 103>

The stainer 103 performs a staining process and a washing process on the slide glass SG smeared by the smearer 10, and performs a drying process on the slide glass SG after the staining. After the staining and drying, the slide glass SG is transported to the storage 104.

### <Storage 104>

The storage 104 stores the dried slide glass SG by containing it in a slide magazine 8 (which may also be referred to as a slide rack). Further, when the slide transporter 5 is connected to the storage 104, the stored slide glass SG is transported to the slide transporter 5 by a slide magazine transport unit (not shown). Note that for the dryer 102, the stainer 103, the storage 104, and the like of the smearing apparatus 1, for example, the configuration of the smearing apparatus described in Japanese Patent Application Publication No. 2019-20353 can be applied. For details of the slide transporter 5, for example, the configuration of the specimen transport apparatus described in Japanese Patent Application Publication No. 2019-20353 can be applied. Japanese Patent Application Publication No. 2019-20353 is incorporated herein by reference.

### (Detailed Description of Storage 104)

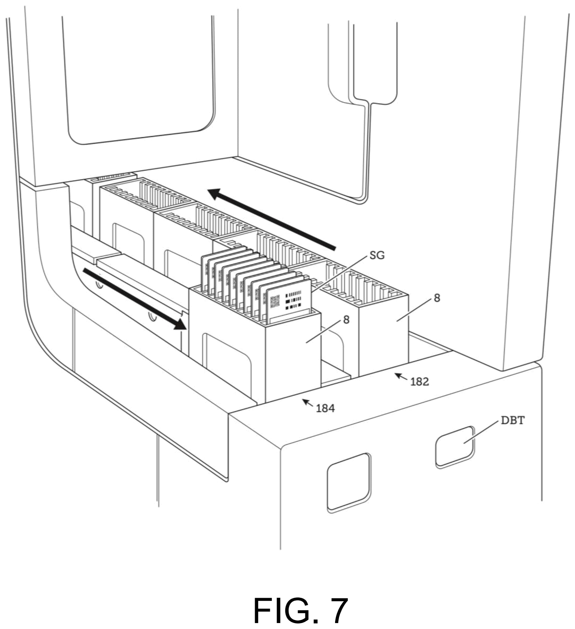

FIG. 7 is a diagram for explaining the slide magazine 8 and a loading/unloading mechanism of the slide magazine 8 in the storage 104. The slide magazine 8 is a slide container for slide glasses SG (smear specimens, smear specimen slides), and is configured to store a plurality of (for example, ten) slide glasses SG. As shown in FIG. 7, the slide magazine 8 has a box-like shape with an open top surface, and is provided with partitions therein. The partitions are formed on the inner surfaces of opposing longitudinal walls. A partition formed on the inner surface of one wall and a partition formed on the inner surface of the other opposing wall are formed at opposing positions.

The storage 104 includes, as a transport unit for transporting the slide magazine 8, for example as shown in FIG. 7, a magazine entry path 182 (the transport path on the right side in the drawing) as a transport path capable of setting a plurality of (for example, eight) empty slide magazines 8 and transporting the set slide magazines 8 to a predetermined specimen storage position (not shown), a magazine exit path 184 (the transport path on the left side in the drawing) as a transport path for transporting the slide magazine 8 containing smear specimens to the outside, and a lateral feed mechanism (not shown) for laterally feeding the slide magazine 8 from the magazine entry path 182 to the magazine exit path 184.

In response to a user setting an empty slide magazine 8 in the magazine entry path 182, the slide magazine 8 is automatically transported toward the specimen storage position. The smear specimen is picked up by a transfer unit (not shown) and stored in an empty storage position (storage portion) of the slide magazine 8 disposed at the specimen storage position. The full slide magazine 8 is laterally fed from the magazine entry path 182 to the magazine exit path 184 by the lateral feed mechanism. Then, the slide magazine 8 laterally fed to the magazine exit path 184 is carried out (transported to the outside).

Further, on the outer surface of the smearing apparatus 1, at a position on the front side of the magazine entry path 182 in this example, an unload button DBT is provided for a user to unload the slide magazine 8 from the magazine exit path 184 at an arbitrary timing. In response to an operation of the unload button DBT by the user, the slide magazine 8 is unloaded from the magazine exit path 184.

Upon detection that the remaining number of empty slide magazines 8 has reached a predetermined number (for example, three), the controller 11 of the smearing apparatus 1 may notify the user by, for example, causing the display 13 to display a message to that effect (or causing a sound output unit to output a sound).

### 6. Description of Block Diagrams

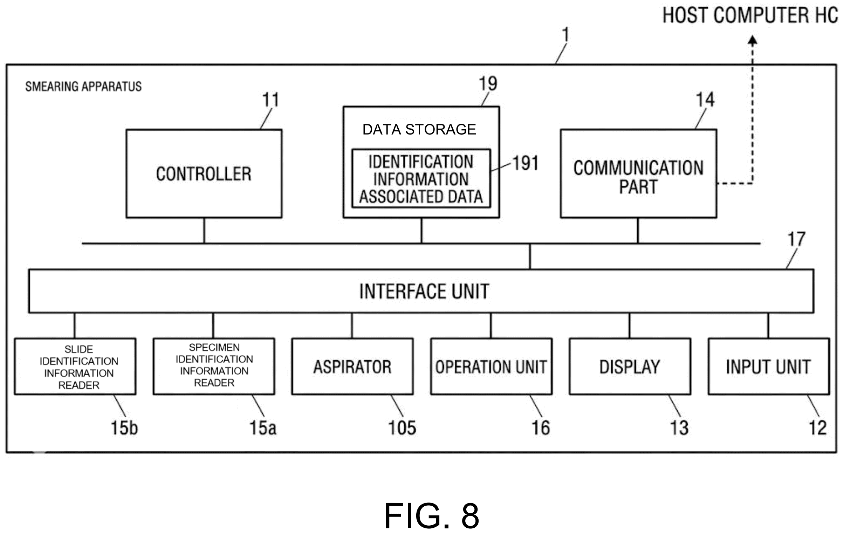

Configurations of the smearing apparatus 1, the imaging apparatus 2, the blood cell counter 3, and the host computer HC will be described with reference to FIGS. 8 to 11. The block diagrams are mainly intended to illustrate electrical connection relationships, and illustration of some of the functional units described above is omitted.

### <Smearing Apparatus 1>

FIG. 8 is a block diagram showing a configuration of the smearing apparatus 1. The smearing apparatus 1 includes a controller 11, a data storage 19, and a communication part 14, which are connected via a bus. The smearing apparatus 1 further includes an input part 12, a display 13, a specimen information identification reader 15a, a slide identification information reader 15b, an aspirator 105, and an operation unit 16, which are connected to the controller 11 and the like via an interface 17.

The controller 11 is a processor that comprehensively controls each part of the smearing apparatus 1 according to various programs such as a system program stored in the data storage 19. The controller 11 may be configured by a processing circuit such as a CPU (Central Processing Unit), a GPU (Graphics Processing Unit), a DSP (Digital Signal Processor), an ASIC (Application Specific Integrated Circuit), or an FPGA (Field Programmable Gate Array).

The data storage 19 stores programs for realizing various functions of the smearing apparatus 1. The data storage 19 may be configured by a memory circuit such as a ROM (Read Only Memory), a RAM (Random Access Memory), or a flash memory, a hard disk device, a magneto-optical disk device, or the like. Identification information association data 191 is stored in the data storage 19.

The communication part 14 is a communication device for transmitting and receiving information used inside the apparatus to and from an external apparatus. As a communication method of the communication part 14, various methods may be applied, such as a wired connection via a cable complying with a predetermined communication standard such as Ethernet or USB (Universal Serial Bus), a wireless connection using a wireless communication technology complying with a predetermined communication standard such as Wi-Fi (registered trademark) or 5G (5th Generation Mobile Communication System), or a connection using short-range wireless communication such as Bluetooth (registered trademark). The controller 11 is configured to be able to communicate with the host computer HC via the communication part 14.

The input part 12 is configured with an input device, such as operation buttons and operation switches, for a user to perform various operation inputs to the smearing apparatus 1. The input part 12 may include, for example, a touch panel (not shown) configured integrally with the display 13, and this touch panel may function as an input interface between the user and the smearing apparatus 1.

The display 13 includes, for example, an LCD (Liquid Crystal Display), an OELD (Organic Electro-luminescence Display), or the like, and performs display based on a display signal output from the controller 11. As described above, the display 13 is configured as, for example, a touch screen having an integrally configured touch panel.

The operation unit 16 is a mechanical unit that handles the slide glass SG by operating under the control of the controller 11, and is a collective term for the supply unit 101, the smearer 10, the dryer 102, the stainer 103, and the storage 104 illustrated in FIG. 2. The operation unit 16 includes various sensors and actuators. The controller 11 controls the operation of the operation unit 16 by transmitting drive signals to the actuators via the interface 17 and receiving signals from the sensors via the interface 17.

### <Imaging Apparatus 2>

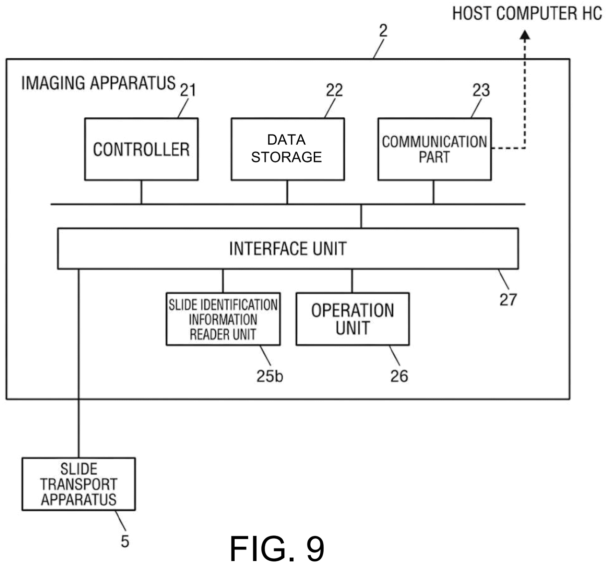

FIG. 9 is a block diagram showing a configuration of the imaging apparatus 2. The imaging apparatus 2 includes a controller 21, a data storage 22, and a communication part 23, which are connected via a bus. The imaging apparatus 2 further includes a slide identification information reader 25b and an operation unit 26, which are connected to the controller 21 and the like via an interface 27.

The operation unit 26 handles the slide glass SG by operating under the control of the controller 21, and is a collective term for the transfer unit 201, the oil applicator 202, the imager 203, and the storage 28 shown in FIG. 2. The operation unit 26 includes various sensors and actuators. The controller 21 controls the operation of the operation unit 26 by transmitting drive signals to the actuators via the interface 27 and receiving signals from the sensors via the interface 27. The controller 21 is connected to the slide transporter 5 via the interface 27. The controller 21 controls the slide transporter 5 by exchanging signals with the slide transporter 5.

### <Blood Cell Counter 3>

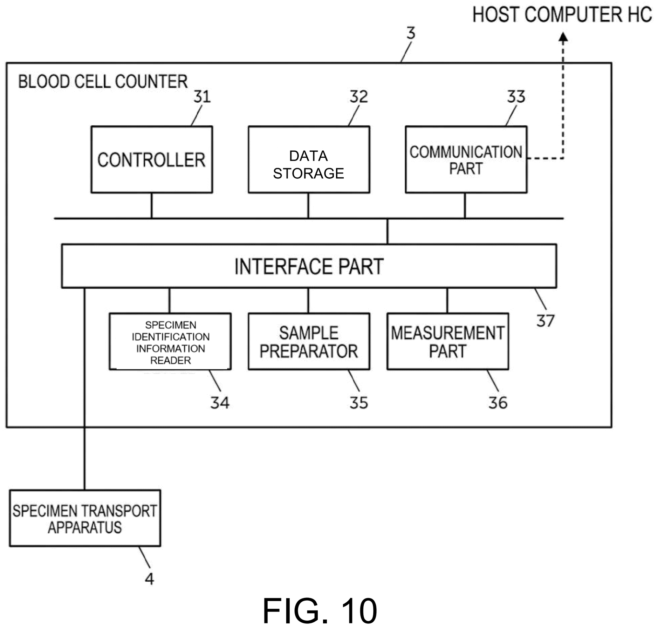

FIG. 10 is a block diagram showing a configuration of the blood cell counter 3. The blood cell counter 3 is an apparatus that counts blood cells contained in a blood specimen. The blood cell counter 3 includes a controller 31, a data storage 32, and a communication part 33, which are connected via a bus. The blood cell counter 3 further includes a specimen identification information 34, a sample preparator 35, and a measurement part 36, which are connected to the controller 31 and the like via an interface 37. Further, the controller 31 is connected to the specimen transporter 4 via the interface 37.

The specimen identification information reader 34 reads the specimen number of the specimen container BP. The sample preparator 35 aspirates the specimen from the specimen container BP and prepares a measurement sample by mixing the aspirated specimen with a reagent. The measurement part 36 measures the measurement sample and generates measurement data. The controller 31 analyzes the measurement data generated by the measurement part 36 based on an analysis program stored in the data storage 32, and generates an analysis result of the blood specimen. The analysis result generated by the blood cell counter 3 is referred to as hematology test result data. The controller 31 stores the hematology test result data in the data storage 32 in association with the specimen number. The controller 31 transmits the hematology test result data stored in the data storage 32 to the host computer HC via the communication part 33. The data storage 32 stores a control program for controlling the operation of the blood cell counter 3 in addition to the analysis program. The controller 31 controls the operations of the specimen identification information reader 34, the sample preparator 35, and the measurement part 36 by executing the control program.

The measurement part 36 includes, for example, (1) an electrical measurement part, (2) an optical measurement part, and (3) a hemoglobin measurement part. The electrical measurement part passes a measurement sample through an aperture to which a voltage is applied, and electrically measures cells based on a change in electrical resistance when the cells pass through the aperture. The optical measurement part is, for example, a flow cytometer type measurement part. The optical measurement part includes, for example, a flow cell, a light source, and a light detector, passes a measurement sample through the flow cell irradiated with light by the light source, and optically measures cells by detecting a plurality of types of light emitted from individual cells when passing through the flow cell with a plurality of light detectors. The hemoglobin measurement part measures the absorbance of a measurement sample in which red blood cells are lysed. In one example, red blood cells and platelets are counted based on measurement data from the electrical measurement part. White blood cells are classified into a plurality of subclasses and counted based on measurement data from the optical measurement part. A hemoglobin concentration is determined based on measurement data from the hemoglobin measurement part.

### <Host Computer HC>

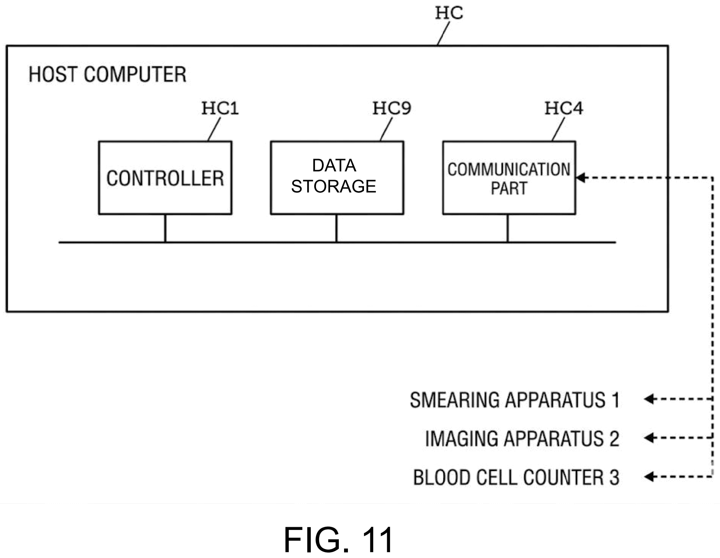

FIG. 11 is a block diagram showing a configuration of the host computer HC. The host computer HC is a computer that centrally manages test data transmitted from various test apparatuses, information regarding patients to be tested, and the like in a medical institution.

The host computer HC includes, for example, a controller HCl, a communication part HC4, and a data storage HC9, which are connected via a bus. The controller HC1 controls the operation of the entire host computer HC. The communication part HC4 performs data communication with the smearing apparatus 1, the imaging apparatus 2, and the blood cell counter 3.

The host computer HC has, for example, the following functions:

### • Management and provision of order information:

The host computer HC stores order information such as a measurement order requested to the blood cell counter 3 and a smearing order requested to the smearing apparatus 1. The host computer HC provides the order information in response to inquiries from each apparatus.

### • Management and provision of result data:

The host computer HC stores, in the data storage HC9, result data in which the hematology test result data acquired from the blood cell counter 3 and the image data acquired from the imaging apparatus 2 are integrated. The host computer HC reads the result data from the data storage HC9 in response to an inquiry from a terminal device, and provides the result data to the terminal device. The terminal device is, for example, a computer permitted to access the same test information network as the host computer HC. For example, when the terminal device requests result data from the host computer HC using the specimen number as a key, the host computer HC reads the result data corresponding to the specimen number from the data storage HC9 and returns it to the terminal device.

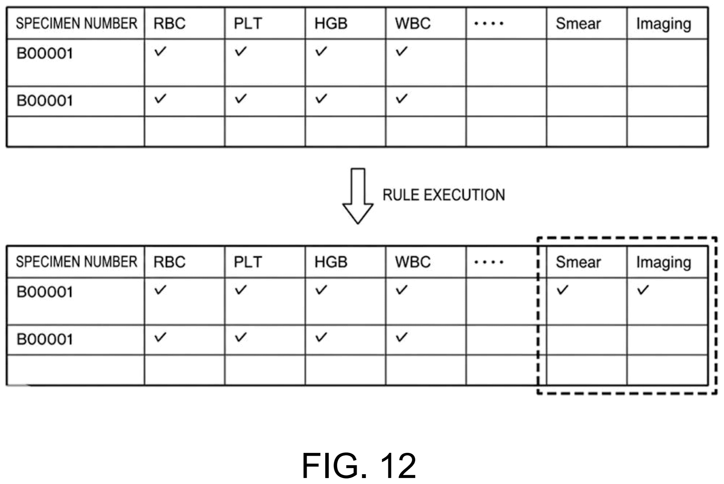

FIG. 12 is a diagram for explaining an example of order information stored in the data storage HC9 of the host computer HC. The data storage HC9 stores, for example, a test order input via a hospital information system HIS. In the example of FIG. 12, a measurement order for the blood cell counter 3 (hereinafter referred to as a blood count order) is stored in association with a specimen number. The blood count order includes measurement items requesting measurement by the blood cell counter 3, and in the example of FIG. 12, measurement of RBC (red blood cell count), PLT (platelet count), HGB (hemoglobin concentration), and WBC (white blood cell count) is requested. In FIG. 12, a check mark is entered in the column corresponding to the ordered measurement item name. When the blood cell counter 3 inquires the host computer HC for a blood count order using the specimen number read from the specimen container BP as a key, the host computer HC returns the blood count order corresponding to the received specimen number to the blood cell counter 3. The blood cell counter 3 measures the measurement items included in the received blood count order and returns hematology test result data obtained by the measurement to the host computer HC together with the specimen number.

The host computer HC executes a rule for determining the necessity of additional tests based on the received hematology test result data. If it is determined that smear preparation is necessary as a result of the rule execution, a smear order is generated. In addition to the smear preparation, if it is determined that blood cell imaging is necessary, an imaging order is generated. In the order information in the lower part of FIG. 12, check marks are entered in the columns of "Smear" and "Imaging". In response to an inquiry from the smearing apparatus 1 for the necessity of smearing based on the specimen number read from the specimen container BP as a key, the host computer HC returns a smear order corresponding to the received specimen number to the smearing apparatus 1. An inquiry for the imaging order will be described later.

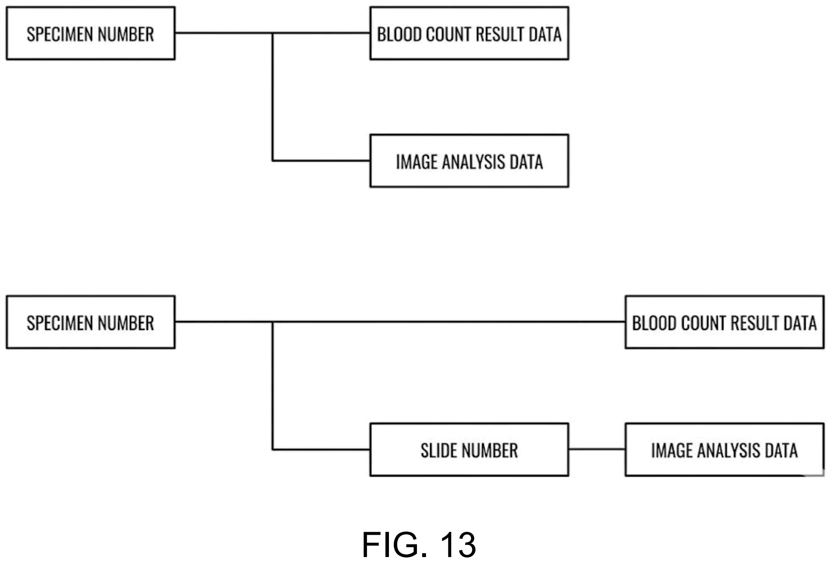

FIG. 13 is a diagram for explaining a structure of result data constructed by the host computer HC in the data storage HC9. The result data includes hematology test result data generated by the blood cell counter 3 and image analysis data generated by the imaging apparatus 2, and these are associated by a specimen number. The controller HC1 of the host computer HC digitally associates the hematology test result data received from the blood cell counter 3 with the image analysis data received from the imaging apparatus 2 and stores the associated data in the data storage HC9 as shown in FIG. 13, if the specimen number of the hematology test result data is the same as that of the image analysis data.

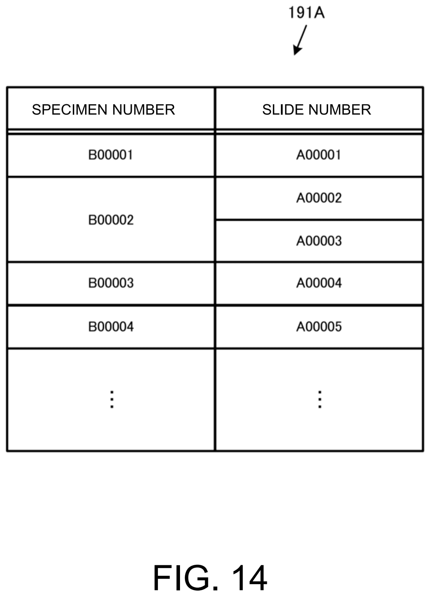

FIG. 14 is a diagram showing a data configuration example of identification information association data 191A, which is an example of identification information association data 191. In the identification information association data 191A, for example, a specimen number and a slide number are stored in association with each other.

In the present embodiment, it is possible to associate a plurality of slide numbers with one specimen number. That is, some specimen numbers are associated with a plurality of slide numbers. For example, two slide numbers "A0002" and "A0003" are stored in association with the specimen number "B0002."

One slide number may be associated with one specimen number, in which case the specimen number and the slide number have a one-to-one association.

Instead of storing the slide number and the specimen number in the identification information association data 191A in association with each other, for example, a slide identification machine-readable code (for example, a code image of a one-dimensional code or a two-dimensional code) and a specimen identification machine-readable code (for example, a code image of a one-dimensional code or a two-dimensional code) may be stored in association with each other. Further, information on the location of the slide number (for example, URI of the slide number) and information on the location of the specimen number (for example, URI of the specimen number) may be stored in association with each other.

### 7. Flow of Association

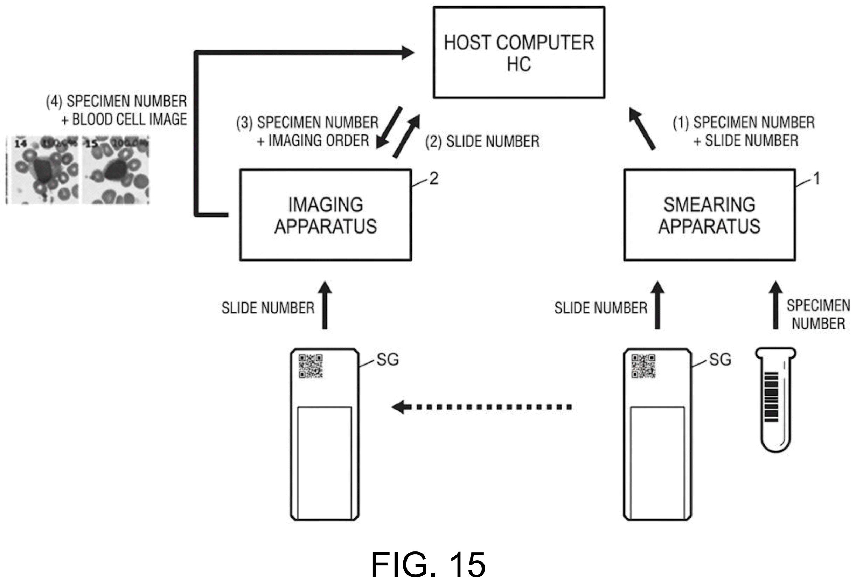

FIG. 15 is a schematic diagram showing a flow of association between a specimen number and a slide number by the specimen analysis system S. In FIG. 15, a part related to the association between the specimen number and the slide number is extracted from the entire processing of the specimen analysis system S.

One object of the specimen analysis system S according to the present embodiment is to identify a specimen smeared on a slide glass SG without printing a specimen number on the slide glass SG as in the prior art. Identification of a specimen by the specimen analysis system S means, for example, that the imaging apparatus 2 or the host computer HC of the specimen analysis system S identifies the specimen smeared on the slide glass SG. In a conventional system in which the smearing apparatus 1 prints a specimen number read from a specimen container BP on a slide glass SG, the imaging apparatus 2 could identify the specimen smeared on the slide glass SG by reading the print on the slide glass SG supplied from the smearing apparatus 1. However, as described above, the printer of the smearing apparatus 1 has a problem of being easily broken, and in this conventional system, an inspection using an imaging apparatus may be interrupted because of a failure of the printer. Therefore, the specimen analysis system S according to the present embodiment does not include an internal printer in the smearing apparatus 1, but uses a slide number pre-printed on the slide glass SG so that the imaging apparatus 2 can identify the specimen using the slide number. This will be described below with reference to FIG. 15.
(1) The smearing apparatus 1 obtains a specimen number from the specimen container BP and obtains a slide number pre-printed on the slide glass SG. The smearing apparatus 1, for example, digitally associates the specimen number of the smeared specimen with the slide number (for example, identification information association data 191A) and transmits them to the host computer HC. The slide glass SG on which the specimen is smeared is transported to the imaging apparatus 2.
(2) The imaging apparatus 2 obtains the slide number from the transported slide glass SG. The imaging apparatus 2 transmits the slide number to the host computer HC.
(3) The host computer HC identifies the specimen number associated with the received slide number, and inquires about an imaging order for the identified specimen number. The host computer HC transmits the specimen number and the imaging order to the imaging apparatus 2. This enables the imaging apparatus 2 to identify the specimen smeared on the slide glass SG.
(4) The imaging apparatus 2 captures an image of the slide glass SG based on the imaging order, and transmits the obtained blood cell image to the host computer HC in association with the specimen number.

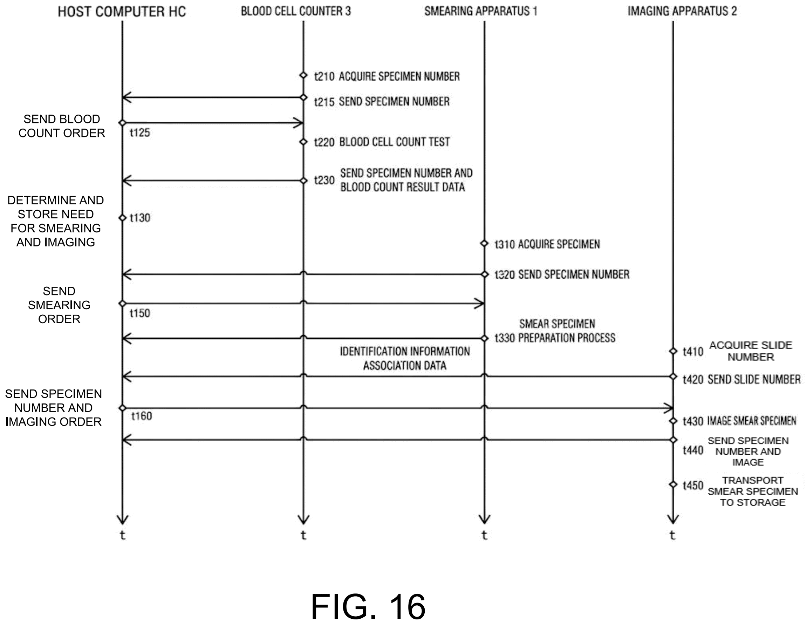

FIG. 16 is a timing chart showing an example of processing performed by the controller HC1 of the host computer HC, processing performed by the controller 31 of the blood cell counter 3, processing performed by the controller 11 of the smearing apparatus 1, and processing performed by the controller 21 of the imaging apparatus 2 in the present embodiment. In the following, for convenience of explanation, the host computer HC, the blood cell counter 3, the smearing apparatus 1, and the imaging apparatus 2 will be mainly described, but the controller provided in each apparatus is the main body of control.

When the specimen transporter 4 transports a rack to the blood cell counter 3, the blood cell counter 3 reads the specimen number assigned to the specimen container BP by the specimen identification information reader 34 (t210). The blood cell counter 3 transmits the specimen number to the host computer HC (t215). In response, the host computer HC transmits the blood count order stored in the storage in association with the received specimen number to the blood cell counter 3 (t125).

Upon receiving the blood count order from the host computer HC, the blood cell counter 3 performs a blood cell counting test based on the blood count order (t220). The blood cell counter 3 transmits the specimen number and the hematology test result data to the host computer HC (t230).

Upon receiving the specimen number and the hematology test result data from the blood cell counter 3, the host computer HC stores the hematology test result data in the storage in association with the specimen number. The host computer HC executes a determination rule based on the hematology test result data to determine the necessity of smearing and the necessity of imaging. The host computer HC stores the necessity of smearing and the necessity of imaging in the data storage HC9 in association with the specimen number (t130).

In response to completion of the test by the blood cell counter 3, the specimen transporter 4 transports the rack to the smearing apparatus 1. When the rack arrives at the smearing apparatus 1, the smearing apparatus 1 obtains the specimen number assigned to each specimen container BP of the transported rack 7 from the specimen identification information reader 15a (t310).

The smearing apparatus 1 transmits the obtained specimen number to the host computer HC (t320). In response, the host computer HC transmits the smear order stored in the storage in association with the received specimen number to the smearing apparatus 1 (t150).

Upon receiving the smear order, the smearing apparatus 1 executes a smear specimen preparation process (slide preparation process) (t330). Although details will be described later, the smearing apparatus 1 controls the supply unit to transport an unused slide glass SG to a reading position of the slide identification information reader 15b. The controller 11 causes the slide identification information reader 15b to read the machine-readable code of the slide glass SG, obtains the slide number by decoding the machine-readable code with the slide identification information reader 15b, associates the slide number with the specimen number obtained and stored at t310, and updates and stores the identification information association data 191A in the data storage 19. The smearing apparatus 1 transmits the identification information association data 191A stored in the data storage 19 to the host computer HC.

The smearing apparatus 1 causes the aspirator 105 to aspirate the specimen from the specimen container BP and causes the specimen to be dispensed onto the smearing area SGa of the slide glass SG. The controller 11 controls the smearing member 162 to smear the dispensed specimen. Further, after the smearing process, a drying process by the dryer 102 and a staining process by the stainer 103 are executed, and a smear specimen is prepared.

The controller 11 of the smearing apparatus 1 controls the prepared smear specimen to be transported to the imaging apparatus 2.

For the smear specimen transported to the imaging apparatus 2, a slide number is read by the slide identification information reader 25b of the imaging apparatus 2. The imaging apparatus 2 obtains the slide number from the specimen identification infomation reader 25b (t410). The imaging apparatus 2 transmits the obtained slide number to the host computer HC (t420).

The host computer HC refers to the identification information association data 191A stored in the data storage HC9, identifies the specimen number associated with the slide number received from the imaging apparatus 2, refers to the imaging order stored in the database of the storage, and transmits the identified specimen number and the imaging order to the imaging apparatus 2 (t160). The imaging apparatus 2 captures an image of the smear specimen by the imager 203 based on the imaging order (t430).

The imaging apparatus 2 transmits the specimen number and the image captured by the imaging apparatus to the host computer HC (t440). The imaging apparatus 2 may classify blood cells based on the captured image and transmit the classification result to the host computer HC together with the specimen number. The smear specimen is transported to the storage 28 (t450).

### 8. Example of Screen

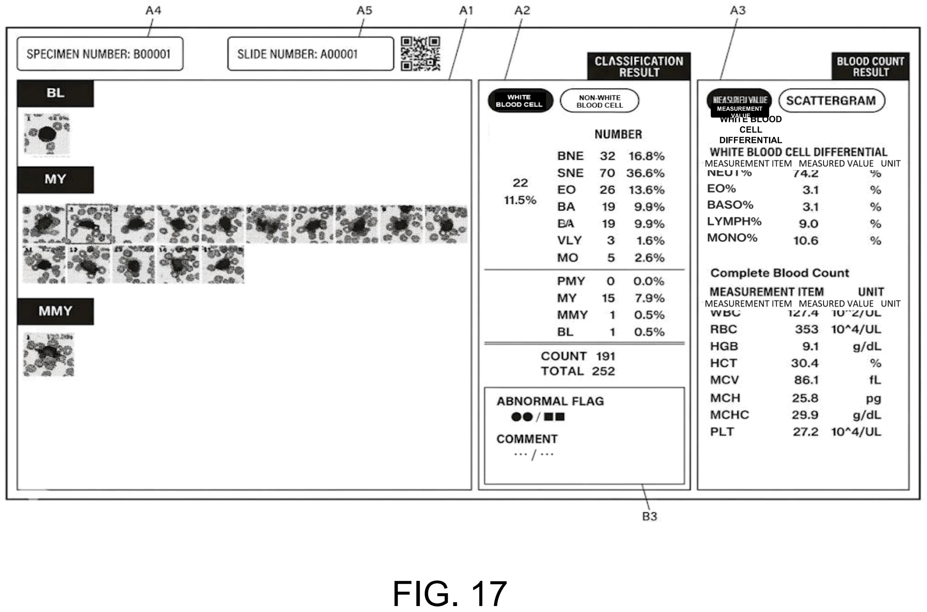

By the processing described above, a blood cell image captured by the imaging apparatus 2 and blood cell count results obtained by the blood cell counter 3 is displayed as a screen for each specimen number. This screen may be displayed on a display (not shown) provided in the imaging apparatus 2 or a display of another device capable of communicating with the imaging apparatus 2. For example, FIG. 17 shows an example of a GUI (Graphical User Interface) displaying data in which each of a blood cell image A1 acquired by the imaging apparatus 2, blood cell classification results A2 obtained by analyzing the blood cell image, and hematology test results A3 is associated with a specimen number A4. In FIG. 17, a slide number A5 associated with the specimen number A4 and a code of the slide number are further displayed. In FIG. 17, blood cell images are classified and displayed for each attribute (for example, BL (blasts), MY (myelocytes), MMY (metamyelocytes)). For example, several to several hundred blood cell images are displayed. The displayed blood cell image may be, for example, an individual captured blood cell image or a blood cell image generated by stitching a plurality of blood cell images. The hematology test results include the number and ratio of blood cells (for example, the number, ratio, etc. of white blood cells) and a histogram of blood cells (for example, a frequency distribution diagram regarding red blood cells).

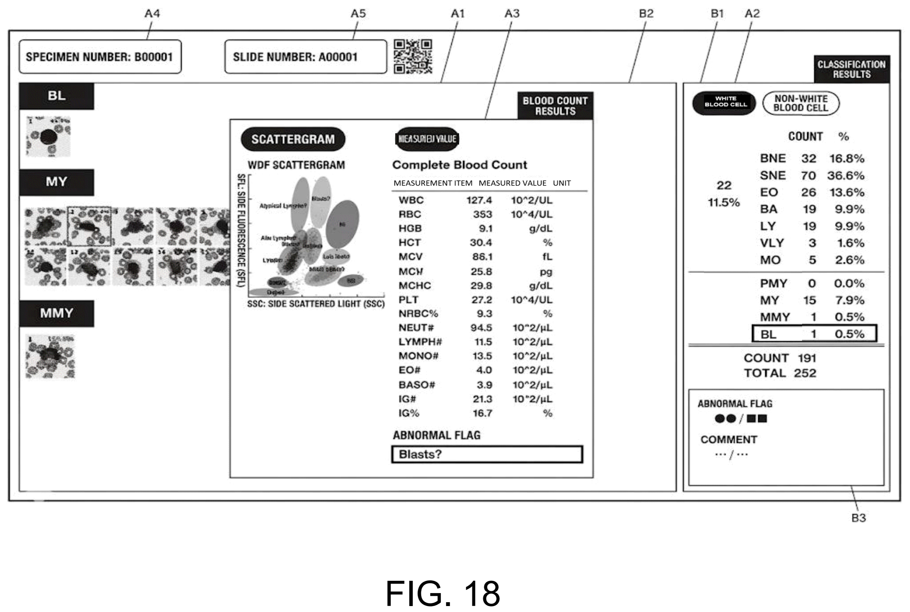

As shown in FIG. 18, on the screen, for example, a first area B1 for displaying the classification results A2 and a second area B2 for displaying the blood cell image A1 are displayed, and in response to selection of an attribute (for example, a classification type indicated by a thick frame: BL (blasts)), a scattergram included in the hematology test results A3 related to the selection of the attribute (for example, a scattergram in which a cell population representing Blasts (blasts) appears) may be displayed.

### (Processing of Smearing Apparatus 1)

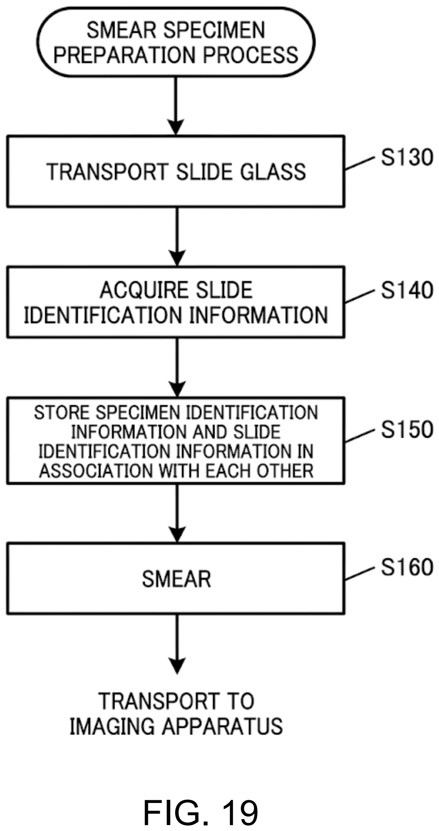

The smear preparation process will be described with reference to FIG. 19. FIG. 19 is a flowchart showing an example of the flow of the smear specimen preparation process performed by the smearing apparatus 1 among the processes shown in the timing chart of FIG. 16.

The controller 11 controls the supply unit to transport an unused slide glass SG to a reading position of the slide identification information reader 15b (S130). The controller 11 causes the slide identification information reader 15b to read the machine-readable code of the slide glass SG, and the slide identification information reader 15b obtains the slide number by decoding (S140).

The controller 11 digitally associates the specimen number obtained at t310 with the slide number obtained at S140, and updates and stores the identification information association data 191A in the data storage 19 (S150). As described above, the controller 11 may, for example, transmit the identification information association data 191A stored in the data storage 19 to the host computer HC.

Optionally, the smearing apparatus 1 may digitally associate the specimen number of the smeared specimen with the slide number (for example, identification information association data 191A) and transmit them to the imaging apparatus 2 without going through the host computer HC. Specifically, in the timing chart of FIG. 16, the smearing apparatus 1 may transmit the identification information association data 191A to the imaging apparatus 2, for example, at t330. Accordingly, for example, after obtaining the slide number at t410, the imaging apparatus 2 is able to identify the specimen number associated with the obtained slide number by referring to the identification information association data 191A. Further, the smearing apparatus 1 may transmit the identification information association data 191A to both the host computer HC and the imaging apparatus 2. In this case, the host computer HC may, for example, not transmit the specimen number to the imaging apparatus 2 at t160 (transmitting only the imaging order to the imaging apparatus 2). That is, the controller 11 of the smearing apparatus 1 may be configured to provide the associated slide identification information and specimen identification information to the imaging apparatus such that the imaging apparatus is able to identify the specimen identification information based on the slide identification information.

The controller 11 controls the smearer 10 to smear the specimen onto the slide glass SG for which the slide number has been obtained (S160). For example, the controller 11 causes the aspirator 105 to aspirate the specimen from the specimen container BP and causes the specimen to be dispensed onto the smearing area SGa of the slide glass SG. The controller 11 controls the smearing member 162 to smear the dispensed specimen. After the smearing process, a drying process by the dryer 102 and a staining process by the stainer 103 are executed, and a smear specimen is prepared.

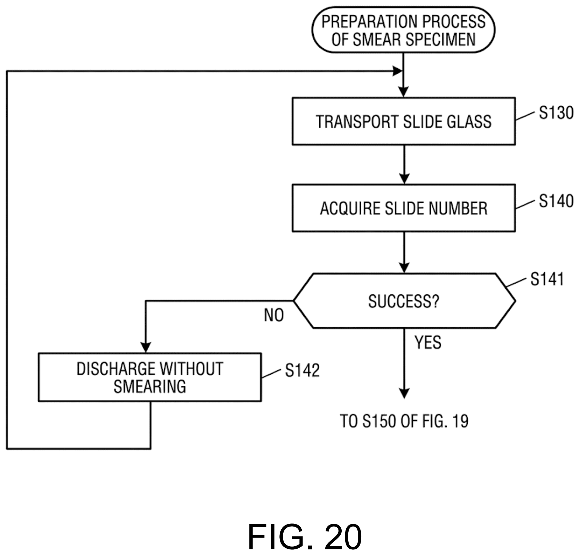

FIG. 20 is a modification of the flowchart in FIG. 19, in which steps S141 and S142 are added. Other steps are as described with reference to FIG. 19, and detailed description thereof will be omitted.

After S140, the controller 11 determines whether the slide identification information reader 15b has successfully read the machine-readable code (S141). For example, the controller 11 instructs the slide identification information reader 15b to obtain a slide number, and determines that the reading is successful based on receipt of the slide number from the slide identification information reading unit 15b. On the other hand, the controller 11 determines that the reading has failed, for example, in response to a reading error returned from the slide identification information reader 15b. The slide identification information reader 15b may output a reading error, for example, when the machine-readable code cannot be recognized or when the machine-readable code cannot be decoded. The case where the machine-readable code cannot be recognized includes, for example, a case where a finder pattern cannot be recognized if the machine-readable code is a QR code (m).

If the reading is successful (S141: YES), the controller 11 advances the process to S150 in FIG. 19. In this way, the specimen is smeared on the slide glass SG for which the machine-readable code has been successfully read. On the other hand, if the reading fails (S141: NO), the controller 11 controls each part of the smearing apparatus 1 to discharge the slide glass SG for which the reading has failed without smearing the specimen thereon (S142). For example, the slide glass SG passes through the smearer 10, the dryer 102, and the stainer 103, and is discharged to the storage 104. The controller 11 returns the process to S130 and causes the supply unit 101 to supply a new slide glass SG. The controller 11 executes the processes from S140 onward for the new slide glass SG.

According to this configuration, for example, in a case where a slide number cannot be obtained because of a printing defect of the machine-readable code of the slide glass SG, it is possible to prevent the specimen from being smeared on such a defective slide glass SG.

The controller 11 may stop the supply of a new slide glass SG, for example, in a case where the reading of the slide number in the determination of S141 continuously fails a plurality of times (for example, twice). In this case, since there is a possibility that the slide identification information reader 15b is abnormal, the controller 11 may output an error message suggesting, for example, inspection of the slide identification information reader 15b.

### 9. Auxiliary Functions Based on Association Data

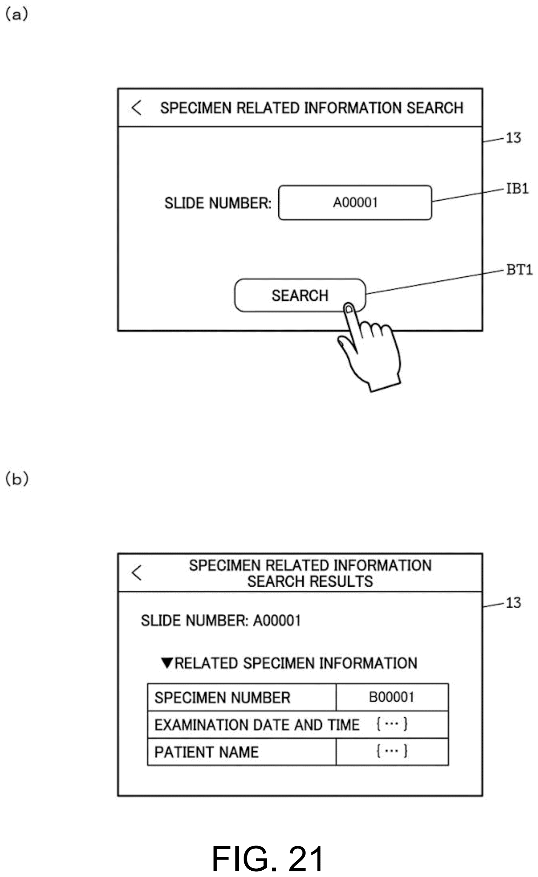

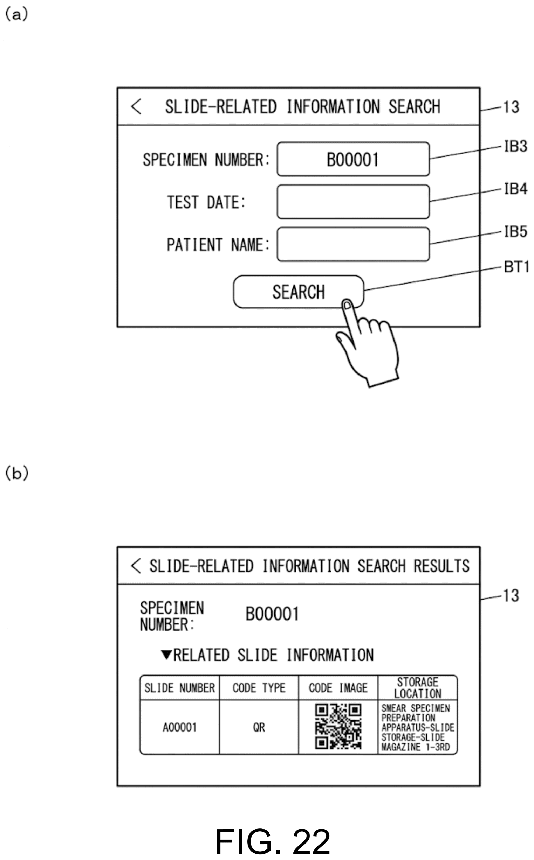

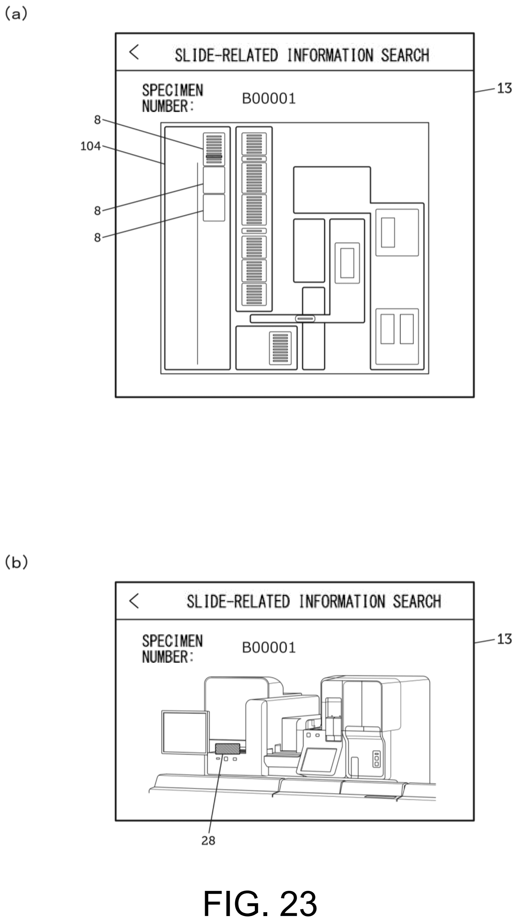

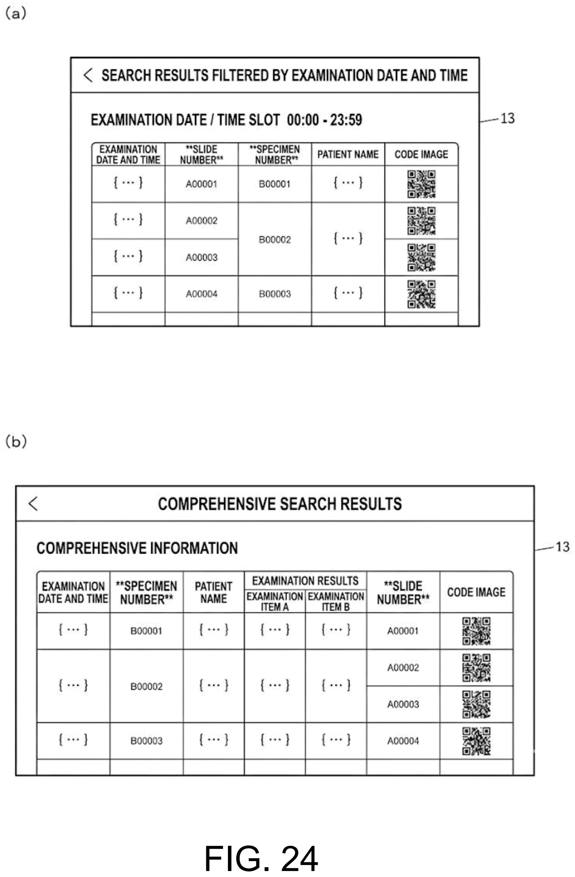

The smearing apparatus 1 may provide the following functions based on the association between slide numbers and specimen numbers (identification information association data 191).
(1) Specimen number search function ((a) and (b) of FIG. 21)
(2) Slide number search function ((a) and (b) of FIG. 22)
(3) Slide location display function ((a) and (b) of FIG. 23)
(4) General search function ((a) and (b) of FIG. 24)

### (1) Specimen Number Search Function

(a) and (b) of FIG. 21 are diagrams showing an example of a screen displayed on the display 13 by the specimen number search function. As shown in (a) of FIG. 21, this screen includes a box IB1 into which a user inputs a slide number via the input part 12. At the lower part of the screen, a "Search" button BT1 for executing a search based on the input slide number is displayed.

In this example, a state is shown in which "A00001" is input and displayed as the slide number in the box IB1. When the "Search" button BT1 is operated (for example, touch/tap operation, click operation) in this state, for example, a specimen-related information search result screen of (b) of FIG. 21 is displayed. On the specimen-related information search result screen, "A00001" is displayed as the slide number input in (a) of FIG. 21, and specimen-related information is displayed below it.

In this example, as the specimen-related information, the specimen number associated with the above-mentioned slide number in the identification information association data 191A, the test date and time of the specimen contained in the specimen container BP assigned with this specimen number (which may be a test date; the same applies hereinafter), and a patient name which is the name of a patient corresponding to this specimen are displayed in a table format. However, in the drawing, the date, date and time, name, etc., are expressed as {...} for convenience.

### (2) Slide Number Search Function

(a) and (b) of FIG. 22 are diagrams showing an example of a screen displayed on the display 13 by the slide number search function. As shown in (a) of FIG. 22, this screen includes boxes IB3 to IB5 for inputting a specimen number, a test date (which may be a test date and time; the same applies hereinafter), and a patient name. At the lower part of the screen, a "Search" button BT1 for performing a search based on the input information is displayed. In this example, the test date and the patient name can be input, but for example, only the specimen number may be input.

In this example, a state is shown in which "B00001" is input and displayed as the specimen number in the "specimen number" box IB3. When the "Search" button BT1 is operated in this state, for example, a slide-related information search result screen of (b) of FIG. 22 is displayed. On the slide-related information search result screen, in an area below a header area, "B00001" is displayed as the specimen number input on the screen of (a) of FIG. 22, and slide-related information is displayed below it.

In this example, as the slide-related information, the slide number associated with the above-mentioned specimen number in the identification information association data 191A, a code type (for example, "QR" indicating a QR code) which is a type of a code printed on the slide glass to which the slide number is assigned, a code image of this code type (for example, a QR code image), and information on the storage location of this slide glass are displayed in a table format.

Note that, for example, as in the slide-related information search result screen shown in (b) of FIG. 22, the slide storage location within the smearing apparatus 1 (the position where the smear specimen (smear specimen slide) is stored) may be displayed. In FIG. (b) of 22, "Smearing apparatus - Slide storage - Slide magazine 1 - 3rd" is displayed as the slide storage location.

### (3) Slide Location Display Function

(a) and (b) of FIG. 23 are diagrams showing an example of a screen displayed on the display 13 by the slide location display function. In the display example of (a) of FIG. 23, a layout diagram in a plan view showing the internal configuration of the smearing apparatus 1 is displayed on the display 13. In this layout diagram, in the storage 104 on the left part of the drawing, the slide magazine 8 is shown as a vertically elongated rectangle. When there is a smear specimen already stored in the slide magazine 8, its storage position is shown as a horizontally elongated rectangle. A user can identify the location of the slide glass SG of interest based on the layout diagram. Note that, as in the display example of (b) of FIG. 23, the screen may display the position of the slide glass SG in the imaging apparatus 2 (illustrated as the position of the storage 28 in this example).

### (4) General Search Function

(a) and (b) of FIG. 24 are diagrams showing an example of a screen displayed on the display 13 by the general search function. (a) of FIG. 24 shows a screen on which specimen-related information and slide-related information searched based on the test date/time slot input by the user via the input part 12 (in this example, a time slot from "0:00 to 23:59" on the test date input by the user) are displayed. In this example, the test date and time included in the time slot of the date, the slide number corresponding to the slide glass SG on which the specimen tested at this test date and time is smeared, the specimen number associated with this slide number, the patient name, and the code image are displayed in a table format.

(b) of FIG. 24 shows, as an example of a screen different from (a) of FIG. 24, a screen on which specimen-related information, slide-related information, and general information are displayed in a list. This screen may be, for example, a screen displayed based on receiving a user input for displaying general information. On this screen, the test date and time, the specimen number, the patient name, test results (in this example, a test result of test item A and a test result of test item B), the slide number, and the code image are displayed in a table format. Unlike other screens, test results are also displayed on this screen. The test results may be stored in the host computer HC in association with, for example, the specimen number.

### <Effects of First Embodiment>

According to the present embodiment, a smearing apparatus (for example, smearing apparatus 1) usable in a system including an imaging apparatus (for example, imaging apparatus 2) includes: a supply unit (for example, supply unit 101) configured to store and supply a slide glass (for example, slide glass SG) assigned with slide identification information; an aspirator (for example, aspirator 105) configured to aspirate a specimen contained in a specimen container (for example, specimen container BP); a smearer (for example, smearer 10) configured to smear the specimen onto the slide glass; a stainer (for example, stainer 103) configured to stain the specimen smeared on the slide glass by the smearer with a staining solution; a first reader (for example, specimen identification information reader 15a) configured to read specimen identification information (for example, a specimen number) assigned to the specimen container; a second reader (for example, slide identification information reader 15b) configured to read slide identification information (for example, a slide number) assigned to the slide glass SG on which the specimen is smeared; and a controller (for example, controller 11) configured to associate the slide identification information with the specimen identification information.

According to the present embodiment, the smearing apparatus does not comprise an internal printer for printing on the slide glass. Note that the controller of the smearing apparatus may provide the associated slide identification information and specimen identification information to the imaging apparatus such that the imaging apparatus is able to identify the specimen identification information based on the slide identification information. Thus, for example, it is possible to identify the specimen smeared on the slide glass without providing an internal printer in the smearing apparatus. Further, it is no longer necessary to provide an internal printer in the smearing apparatus, and for example, it is no longer necessary to stop processing of the smear specimen even if a disconnection occurs in the internal printer. Furthermore, by not mounting an internal printer, the manufacturing cost of the smearing apparatus can be reduced.

According to the present embodiment, the controller controls the smearer to smear the specimen on the slide glass whose slide identification information has been successfully read by the second reader; therefore, it is possible to prevent the specimen from being smeared on a slide glass for which the slide identification information cannot be read, thereby preventing wasteful smearing.

According to the present embodiment, the controller controls the aspirator to aspirate the specimen from the specimen container whose specimen identification information has been successfully read by the first reader, and controls the smearer to smear the aspirated specimen on the slide glass whose slide identification information has been successfully read by the second reader; therefore, it is possible to prevent smearing of a specimen contained in a specimen container whose specimen identification information cannot be read, thereby preventing wasteful smearing.

The second reader reads a machine-readable code as the slide identification information assigned to the slide glass, and the controller controls the smearer to smear the specimen onto the slide glass for which the machine-readable code is successfully decoded; therefore, it is possible to prevent the specimen from being smeared on a slide glass for which the machine-readable code as the slide identification information cannot be decoded, thereby preventing wasteful smearing.

The controller controls the smearer not to smear the specimen on the slide glass for which the second reader fails to read the slide identification information; therefore, it is possible to prevent wasteful smearing.

According to the present embodiment, the second reader reads the slide identification information printed on the surface of the slide glass. The slide identification information may be pre-printed on the surface of the slide glass. That is, the second reader may read the slide identification information pre-printed on the surface of the slide glass. Compared to the case of reading slide identification information from a label attached to the slide glass, it is possible to reduce the possibility of failure in reading the slide identification information because of the label peeling off or wrinkling.

According to the present embodiment, since the smearer smears the specimen onto the slide glass assigned with the slide identification information, it is possible to identify the specimen container containing the specimen smeared on the slide glass identified by the slide identification information from the slide identification information, or to identify the slide glass on which the specimen contained in the specimen container identified by the specimen identification information is smeared from the specimen identification information.

According to the present embodiment, the second reader is disposed between the supply unit and the smearer. The second reader reads the slide identification information of the slide glass in a transport path from the supply unit to the smearer. Accordingly, the smearer smears a specific specimen onto the slide glass, thereby preventing a mix-up of specimens.

According to the present embodiment, since the second reader is located between the slide storage and the smearer, the second reader can read the slide identification information prior to the smearing by the smearer.

According to the present embodiment, the second reader reads the slide identification information of the slide glass placed horizontally. By reading the slide identification information of the slide glass placed horizontally without changing its orientation after smearing the specimen on the slide glass in a horizontally placed state, the slide glass can be smoothly transported and the second reader can read the slide identification information.

According to the present embodiment, the first reader reads the specimen identification information before the aspirator aspirates the specimen, thereby preventing a mix-up of specimens. Furthermore, in a state where the specimen container is held in an upright position in the rack, the first reader reads the specimen identification information on the side surface of the specimen container in the upright position without changing its orientation after the specimen is aspirated from the specimen container by the aspirator, so that the specimen container can be smoothly transported and the first reader can read the specimen identification information.

According to the present embodiment, since the first reader reads the specimen identification information assigned to the specimen container as a machine-readable code, the specimen identification information can be appropriately obtained. Also, since the second reader reads the slide identification information assigned to the slide glass as a machine-readable code, the slide identification information can be appropriately obtained.

The controller is configured, in response to receiving the specimen identification information from a user, to provide the slide identification information which is associated with the specimen identification information received, and the controller is configured, in response to receiving the slide identification information, to provide the specimen identification information which is associated with the slide identification information. Thus, the user can confirm the associated slide identification information or specimen identification information on the smearing apparatus.

According to the present embodiment, the controller includes the display (for example, display 13) that displays the specimen identification information associated with the received slide identification information in response to the input of the slide identification information; therefore, the user can confirm the specimen identification information associated with the slide identification information on the smearing apparatus.

Further, according to the present embodiment, in response to receiving the specimen identification information, the display of the smearing apparatus displays information on a storage location of the slide glass on which the specimen contained in the specimen container assigned with the specimen identification information is smeared; therefore, the user can confirm the storage location of the slide glass on the smearing apparatus.

### <Second Embodiment>

FIG. 25 is a diagram showing an example of a functional configuration of the smearing apparatus 1 in the second embodiment. In the example of FIG. 2, a dedicated reader for reading the slide identification information of the slide glass SG supplied from the supply unit 101 was provided as the second reader 15b. In the example of FIG. 25, a dedicated reader for slides is not provided, and a reader 15 commonly used for reading slide identification information and reading reagent information of a reagent used in the smearing apparatus is provided. In other words, in the example of FIG. 25, the slide identification information can also be read by the reader 15 used for reading the reagent information.

The reader 15 may be a reader compatible with both one-dimensional codes and two-dimensional codes, such as a two-dimensional barcode reader, or may be a reader compatible with only one-dimensional codes.

As shown in FIG. 25, the reader 15 may be a hand-held code reader 500, which is a handheld reader connected via, for example, a connector provided on a housing, instead of being built into the smearing apparatus 1.

When replacing a reagent stored in the reagent storage, a user can input reagent information of a new reagent into the controller 11 by causing the reader 15 to read a code assigned to a reagent container of the new reagent. The reagent may be, for example, a staining solution used in the stainer 103. In addition, the reagent may be, for example, a staining solution for cleaning a flow path inside the smearing apparatus 1 or a nozzle of the aspirator 105. The reagent information may include, for example, a reagent type, a lot number, an expiration date, and the like. A barcode or a two-dimensional code in which the above-described reagent information is encoded is printed on the reagent container, and the reagent information is input to the controller 11 by being read by the reader 15.

Furthermore, when replenishing the slide glasses SG to the smearing apparatus 1, that is, when storing new slide glasses SG in the supply unit 101, the user can input the slide identification information into the controller 11 by causing the reader 15 to read the slide identification information of the new slide glass SG. The user may store the slide glass SG in the supply unit 101 after reading the slide identification information. The controller 11 stores the input slide identification information in the data storage 19, and when the slide glass SG is supplied from the supply unit 101, the controller 11 can read out the stored slide identification information and associate it with the specimen identification information. When a plurality of slide glasses SG are replenished to the supply unit 101, the user stores the slide glasses SG in the supply unit 101 in the order in which the slide identification information was read, for example. The supply unit 101 supplies the slide glasses SG in a first-in first-out manner. Therefore, the input order of the slide identification information matches the supply order by the supply unit 101. For example, assume that "A1001" is input as the first slide identification information and "A1002" is input as the second slide identification information. In this case, the slide glass SG of "A1001" is supplied first by the supply unit 101, followed by the slide glass SG of "A1002." The controller 11 reads out the slide identification information in the order of input and associates the slide identification information of each slide glass SG with the specimen identification information.

FIG. 26 is a diagram showing an example of a consumable replacement screen 700 displayed on the display 13. The consumable replacement screen 700 displays the remaining amount of the reagent stored in the reagent storage and the remaining number of slide glasses SG stored in the supply unit 101. In the example of FIG. 26, the consumable replacement screen 700 includes an area 710 for displaying the remaining amount of "CELLPACK DCL" which is an example of a cleaning solution, an area 720 for displaying the remaining amount of concentrated phosphate buffer, an area 730 for displaying the remaining amount of staining solution 1, an area 740 for displaying the remaining amount of staining solution 2, an area 750 for displaying the remaining amount of methanol, and an area 760 for displaying the remaining amount of slide glasses SG. Each area visually displays the remaining amount of the reagent or the slide glass with a numerical value or a graph. When the remaining amount of the reagent or the slide glass falls below a predetermined value, a warning mark 770 is displayed in the corresponding area. The user selects an area corresponding to a reagent or consumable to be replaced from the areas 710 to 760. When any one of the areas is selected, the controller 11 waits for input of information on a new reagent or consumable corresponding to the selected area.

FIG. 27 is a diagram showing an example of a pop-up screen 800 displayed on the display 13. For example, in response to selection of the area 760 in FIG. 26, the controller 11 causes the display 13 to display the pop-up screen 800 in FIG. 27. A message displayed on the pop-up screen 800 is, for example, "Please read the code of the slide glass with a hand reader." While the pop-up screen 800 is being displayed, the controller 11 is able to receive input of the slide identification information of the slide glass SG. The user reads the identification information of the slide glass SG using the reader 15 according to the message. The read slide identification information is stored in the data storage 19 by the controller 11. The association between the stored slide identification information and the specimen identification information is as described above. Although FIG. 27 shows an example of reading slide identification information of a slide glass, for example, if the area 730 is selected on the consumable replacement screen 700 of FIG. 26, a message prompting to read the code of staining solution 1 is displayed. When the code of staining solution 1 is read in this state, reagent information included in the read code, such as a lot number and an expiration date, is input as information of staining solution 1 to the controller 11 and registered in a reagent information database in the data storage 19.

The slide identification information may be input not only by reading from individual slide glasses SG but also by collectively inputting the slide identification information of a plurality of slide glasses SG, that is, in a batch manner. As a batch unit, a box containing a plurality of (for example, 20) slide glasses SG may be used as one unit. In this case, the slide identification information may be assigned to the box of slide glasses SG or an attached document. An example of this case will be described with reference to (a) and (b) of FIG. 28.

(a) and (b) of FIG. 28 are diagrams showing configuration examples of a slide glass set 200 and an attached document 210 of slide glasses SG; (a) of FIG. 28 shows a configuration example of the slide glass set 200, and (b) of FIG. 28 shows a configuration example of the attached document 210.

The slide glass set 200 includes a plurality of slide glasses SG and a packaging box 220 composed of a plurality of members.

The packaging box 220 is made of, for example, paper and includes a box body 221, a pushing member 225, and a lid 222. An ejection port 240 is formed on a side surface 221a of the box body 221. A stack of slide glasses SG is contained inside the box body 221 and the lid 222 such that the stack is sandwiched from both short sides with the short side on the side surface 221a side covered by the pushing member 225.

A user can take out the stack of slide glasses SG from the ejection port 240 by pushing the stack via the pushing member 225. A QR code m1 as a machine-readable code, in which slide identification information for each of the slide glasses SG constituting the packaged stack is encoded, is assigned to a side surface 221b of the box body 221. The QR code m1 may be directly printed on the side surface 221b, or a label on which the QR code m1 is printed may be attached to the side surface 221b.

The attached document 210 may be, for example, a paper document bundled in the packaging box 220 together with the slide glass set 200. On the attached document 210, for example, information such as a trade name of the slide glasses SG, as well as information such as [Warnings], [Contraindications/Prohibitions], [Shape/Structure/Principle, etc.], and [Usage Method] regarding the slide glasses SG are printed. Further, on the attached document 210, for example, information regarding the slide identification information of each of the plurality of slide glasses SG of the slide glass set 200 is printed. In this example, in addition to each piece of slide identification information being printed in characters, a QR code m2 as a machine-readable code in which each piece of slide identification information is encoded is assigned. The QR code m2 may be directly printed on the attached document 210, or a label on which the QR code m2 is printed may be attached to the attached document 210.

Note that, differently from the above, the attached document 210 may be provided as electronic data. In this case, the slide identification information may be obtained directly from the provided electronic data, or the slide identification information may be read from a printed matter on which the electronic data is printed.

The packaging box 220 may be an example of a storage for containing a plurality of slide glasses SG, and the attached document 210 may be an example of an attached document for the slide glasses SG. Also, these may be an example of an accompaniment of the slide glass SG.

The second reader 15b may obtain the slide number from a machine-readable code or the like assigned to the accompaniment of the slide glass SG. In this case, for example, the second reader 15b may be the reader 15 shown in FIG. 25 (for example, the hand-held code reader 500), and a user operates the hand-held code reader 500 to obtain the slide number from the machine-readable code or the like assigned to the accompaniment. The controller 11 obtains the slide number of each slide glass SG from the second reader 15b. Then, the controller 11 stores the obtained slide number in the identification information association data 191A. In this case, if the specimen number has already been obtained, the obtained slide number may be associated with the specimen number. If the specimen number has not yet been obtained, the obtained slide number may be stored first, and the specimen number may be associated therewith later.

As illustrated in FIG. 29, when the second reader 15b obtains the slide number from the machine-readable code assigned to the accompaniment of the slide glass SG, a plurality of slide numbers may be decodable from the machine-readable code. For example, each of the slide numbers "A0001, A0002, A0003..." of the plurality of slide glasses SG included in the slide glass set 200 can be decoded from the machine-readable code assigned to the accompaniment of the slide glass SG. The decoded slide numbers correspond to the slide glasses SG in the storage (for example, the packaging box 220) containing the plurality of slide glasses SG. For example, in the packaging box 220, slide glasses SG with slide numbers "A0001, A0002, A0003..." are contained in a state of being stacked in order from the bottom. This stacking order corresponds to the sequence of the decoded slide numbers and corresponds to the supply order from the case 111 where the stack is stored to the transport unit 120. As described with reference to FIG. 5, the stacked slide glasses SG in the case 111 are supplied to the transport unit 120 by the carry-out unit 113. Therefore, the slide number of the slide glass SG that is n-th in the order of supply from the supply unit 101 to the transport unit 120 can be identified as the n-th slide number among the decoded slide numbers.

The machine-readable code may include information regarding an expiration date of the slide glass SG. When the second reader 15b reads the machine-readable code of a slide glass SG whose expiration date has expired, a pop-up screen may be displayed on the display 13. A message displayed on the pop-up screen is, for example, "The expiration date of the slide glass has expired."

### <Effects of Second Embodiment>

According to the present embodiment, the smearing apparatus further comprises a reagent storage configured to store a reagent, and the second reader is additionally configured to read reagent information of the reagent stored in the reagent storage; therefore, the slide identification information and the reagent information can be read by the same reader.

According to the present embodiment, the reagent storage stores a staining solution as a reagent, and the second reader is configured to read reagent information of the staining solution; therefore, the slide identification information and the reagent information of the staining solution can be read by the same reader.

According to the present embodiment, the second reader can obtain the slide identification information by reading the slide identification information printed on the storage (for example, the packaging box 220) containing a plurality of slide glasses or on the attached document (for example, the attached document 210) for the slide glasses. Note that information capable of identifying the slide identification information of each of the contained slide glasses SG may be printed on the storage or the attached document, in which case the slide identification information of each of the slide glasses can be obtained collectively.

According to the present embodiment, the supply unit is configured to receive the plurality of slide glasses from the storage containing the plurality of slide glasses in a predetermined order, and supplies the plurality of slide glasses to the smearer one by one in the predetermined order; and the controller is configured to identify the slide identification information of the slide glass supplied to the smearer based on the predetermined order and the slide identification information of each of the plurality of slide glasses obtained from the code printed on the storage or the attached document, and associate the identified slide identification information with the specimen identification information. Thus, the slide identification information for each of the plurality of slide glasses can be obtained collectively from the code printed on the storage or the attached document.

### Remarks

The present disclosure includes following items:
Item 1: A smearing apparatus for use in an analysis system including an imaging apparatus configured to capture an image of a smear specimen, the smearing apparatus comprising: a supply unit configured to store a plurality of slide glasses, each assigned with slide identification information, and to supply the slide glasses one by one; an aspirator configured to aspirate a specimen contained in a specimen container; a smearer configured to smear the aspirated specimen onto the slide glass supplied from the supply unit; a stainer configured to stain the specimen smeared on the slide glass with a staining solution; a first reader configured to read specimen identification information assigned to the specimen container; a second reader configured to read the slide identification information; and a controller configured to digitally associate (A) the slide identification information of the slide glass on which the specimen is smeared and (B) the specimen identification information of the smeared specimen, thereby enabling the analysis system to identify the specimen based on the slide identification information.
Item 2: The smearing apparatus according to item 1, wherein the controller is configured to provide the associated slide identification information and specimen identification information to the imaging apparatus such that the system is able to identify the specimen identification information based on the slide identification information.
Item 3: The smearing apparatus according to item 1, wherein the smearing apparatus does not comprise an internal printer for printing on the slide glass.
Item 4: The smearing apparatus according to item 1, wherein the second reader is disposed between the supply unit and the smearer.
Item 5: The smearing apparatus according to item 4, wherein the second reader is configured to read the slide identification information of the slide glass in a transport path from the supply unit to the smearer.
Item 6 The smearing apparatus according to item 1, wherein the second reader is configured to read the slide identification information of the slide glass placed horizontally.
Item 7: The smearing apparatus according to item 1, wherein the first reader is configured to read the specimen identification information on a side surface of the specimen container held in an upright position prior to an aspiration of the specimen by the aspirator.
Item 8: The smearing apparatus according to item 1, wherein the controller is configured to control the smearer to smear the specimen on the slide glass whose slide identification information has been successfully read by the second reader.
Item 9: The smearing apparatus according to item 1, wherein the controller is configured to control the aspirator to aspirate the specimen from the specimen container whose specimen identification information has been successfully read by the first reader, and control the smearer to smear the aspirated specimen on the slide glass whose slide identification information has been successfully read by the second reader.
Item 10: The smearing apparatus according to item 8 or 9, wherein the second reader is configured to read a machine-readable code as the slide identification information assigned to the slide glass; and the controller is configured to control the smearer to smear the specimen onto the slide glass for which the machine-readable code is successfully decoded.
Item 11: The smearing apparatus according to item 1, wherein the controller is configured to control the smearer not to smear the specimen on the slide glass for which the second reader fails to read the slide identification information.
Item 12: The smearing apparatus according to item 1, wherein the controller is configured, in response to receiving the specimen identification information from a user, to provide the slide identification information which is associated with the specimen identification information received, and the controller is configured, in response to receiving the slide identification information, to provide the specimen identification information which is associated with the slide identification information.
Item 13: The smearing apparatus according to item 1, wherein the smearing apparatus further comprises a display, wherein the controller is configured to cause the display to display the specimen identification information in response to a user input specifying the slide identification information, and cause the display to display the slide identification information in response to a user input specifying the specimen identification information.
Item 14: The smearing apparatus according to item 13, wherein the controller is configured to locate the slide glass identified by a user input specifying the slide identification information or the specimen identification information, and to cause the display to display a location of the identified slide glass.
Item 15: The smearing apparatus according to item 1, wherein
   the second reader is configured to read a code printed on a storage containing a plurality of slide glasses or on a document attached to the storage; and
   the slide identification information for each of the plurality of slide glasses can be obtained by single reading of the code.
Item 16: The smearing apparatus according to item 15, wherein
   the supply unit is configured to receive the plurality of slide glasses from the storage in a predetermined order, and supplies the plurality of slide glasses to the smearer one by one in the predetermined order; and
   the controller is configured to identify the slide identification information of the slide glass supplied to the smearer based on the predetermined order and the slide identification information of each of the plurality of slide glasses obtained from the code, and associate the identified slide identification information with the specimen identification information.
Item 17: The smearing apparatus according to item 1, wherein the smearing apparatus further comprises a reagent storage configured to store a reagent, wherein the second reader is additionally configured to read reagent information of the reagent stored in the reagent storage.
Item 18: A specimen analysis system comprising: a smearing apparatus configured to prepare a smear specimen; an imaging apparatus configured to capture an image of the smear specimen; and a controller, wherein the smearing apparatus includes: a supply unit configured to store and supply a slide glass assigned with slide identification information; an aspirator configured to aspirate a specimen contained in a specimen container; a smearer configured to smear the specimen aspirated onto the slide glass supplied from the supply unit; a stainer configured to stain the specimen smeared on the slide glass; and a first reader configured to read specimen identification information assigned to the specimen container; the imaging apparatus includes: a second reader configured to read the slide identification information of the slide glass; and an imager configured to capture an image of the specimen smeared on the slide glass; and the controller is configured to associate the specimen identification information read by the first reader with the slide identification information read by the second reader.
Item 19: The specimen analysis system according to item 18, further comprising a host computer, wherein the imaging apparatus is configured to provide the image acquired by the imaging apparatus to the host computer in association with the specimen identification information.
Item 20: The specimen analysis system according to item 19, further comprising a specimen analyzer configured to analyze the specimen, wherein: the smearing apparatus is configured to smear the specimen analyzed by the specimen analyzer on the slide glass; and the host computer is configured to store an analysis result of the specimen acquired by the specimen analyzer and the image acquired by the imaging apparatus in association with the slide identification information.

## Claims

1. A smearing apparatus for use in an analysis system including an imaging apparatus configured to capture an image of a smear specimen, the smearing apparatus comprising:
a supply unit configured to store a plurality of slide glasses, each assigned with slide identification information, and to supply the slide glasses one by one;
an aspirator configured to aspirate a specimen contained in a specimen container;
a smearer configured to smear the aspirated specimen onto the slide glass supplied from the supply unit;
a stainer configured to stain the specimen smeared on the slide glass with a staining solution;
a first reader configured to read specimen identification information assigned to the specimen container;
a second reader configured to read the slide identification information; and
a controller configured to digitally associate (A) the slide identification information of the slide glass on which the specimen is smeared and (B) the specimen identification information of the smeared specimen, thereby enabling the analysis system to identify the specimen based on the slide identification information.

2. The smearing apparatus according to claim 1, wherein the controller is configured to provide the associated slide identification information and specimen identification information to the imaging apparatus such that the system is able to identify the specimen identification information based on the slide identification information.

3. The smearing apparatus according to claim 1, wherein the smearing apparatus does not comprise an internal printer for printing on the slide glass.

4. The smearing apparatus according to claim 1, wherein the second reader is disposed between the supply unit and the smearer.

5. The smearing apparatus according to claim 4, wherein the second reader is configured to read the slide identification information of the slide glass in a transport path from the supply unit to the smearer.

6. The smearing apparatus according to claim 1, wherein the second reader is configured to read the slide identification information of the slide glass placed horizontally.

7. The smearing apparatus according to claim 1, wherein the first reader is configured to read the specimen identification information on a side surface of the specimen container held in an upright position prior to an aspiration of the specimen by the aspirator.

8. The smearing apparatus according to claim 1, wherein the controller is configured to control the smearer to smear the specimen on the slide glass whose slide identification information has been successfully read by the second reader.

9. The smearing apparatus according to claim 1, wherein the controller is configured to control the aspirator to aspirate the specimen from the specimen container whose specimen identification information has been successfully read by the first reader, and control the smearer to smear the aspirated specimen on the slide glass whose slide identification information has been successfully read by the second reader.

10. The smearing apparatus according to claim 8 or 9, wherein the second reader is configured to read a machine-readable code as the slide identification information assigned to the slide glass; and the controller is configured to control the smearer to smear the specimen onto the slide glass for which the machine-readable code is successfully decoded.

11. The smearing apparatus according to claim 1, wherein the controller is configured to control the smearer not to smear the specimen on the slide glass for which the second reader fails to read the slide identification information.

12. The smearing apparatus according to claim 1, wherein
the controller is configured, in response to receiving the specimen identification information from a user, to provide the slide identification information which is associated with the specimen identification information received, and
the controller is configured, in response to receiving the slide identification information, to provide the specimen identification information which is associated with the slide identification information.

13. The smearing apparatus according to claim 1, wherein the smearing apparatus further comprises a display, wherein
the controller is configured to cause the display to display the specimen identification information in response to a user input specifying the slide identification information, and cause the display to display the slide identification information in response to a user input specifying the specimen identification information.

14. The smearing apparatus according to claim 13, wherein the controller is configured to locate the slide glass identified by a user input specifying the slide identification information or the specimen identification information, and to cause the display to display a location of the identified slide glass.

15. The smearing apparatus according to claim 1, wherein
the second reader is configured to read a code printed on a slide container containing a plurality of slide glasses or on a document attached to the slide container; and
the slide identification information for each of the plurality of slide glasses can be obtained by single reading of the code.

16. The smearing apparatus according to claim 15, wherein
the supply unit is configured to receive the plurality of slide glasses from the slide container in a predetermined order, and supplies the plurality of slide glasses to the smearer one by one in the predetermined order; and
the controller is configured to identify the slide identification information of the slide glass supplied to the smearer based on the predetermined order and the slide identification information of each of the plurality of slide glasses obtained from the code, and associate the identified slide identification information with the specimen identification information.

17. The smearing apparatus according to claim 1, wherein the smearing apparatus further comprises a reagent storage configured to store a reagent, wherein the second reader is additionally configured to read reagent information of the reagent stored in the reagent storage.

18. A specimen analysis system comprising:
a smearing apparatus configured to prepare a smear specimen;
an imaging apparatus configured to capture an image of the smear specimen; and
a controller,
wherein the smearing apparatus includes:
a supply unit configured to store and supply a slide glass assigned with slide identification information;
an aspirator configured to aspirate a specimen contained in a specimen container;
a smearer configured to smear the specimen aspirated onto the slide glass supplied from the supply unit;
a stainer configured to stain the specimen smeared on the slide glass; and
a first reader configured to read specimen identification information assigned to the specimen container;
the imaging apparatus includes:
a second reader configured to read the slide identification information of the slide glass; and
an imager configured to capture an image of the specimen smeared on the slide glass; and
the controller is configured to associate the specimen identification information read by the first reader with the slide identification information read by the second reader.

19. The specimen analysis system according to claim 18, further comprising a host computer, wherein the imaging apparatus is configured to provide the image acquired by the imaging apparatus to the host computer in association with the specimen identification information.

20. The specimen analysis system according to claim 19, further comprising a specimen analyzer configured to analyze the specimen, wherein:
the smearing apparatus is configured to smear the specimen analyzed by the specimen analyzer on the slide glass; and
the host computer is configured to store an analysis result of the specimen acquired by the specimen analyzer and the image acquired by the imaging apparatus in association with the slide identification information.
